# EUROPEAN PATENT SPECIFICATION

(11) **EP 3 807 069 B1**
(45) Date of publication and mention of the grant of the patent: **19.04.2023**
(21) Application number: 19762510.6
(22) Date of filing: 12.08.2019
(51) Int. Cl.: B29C 45/30, B29C 45/28

(54) **DISRUPTED FLOW THROUGH INJECTION MOLDING FLOW CHANNEL**
UNTERBROCHENER FLUSS DURCH EINEN SPRITZGUSS-FLUSSKANAL
CANAL D'ÉCOULEMENT DE MOULAGE PAR INJECTION À ÉCOULEMENT TRAVERSANT INTERROMPU

(30) Priority: 17.08.2018 US 201862765137 P; 24.09.2018 US 201862735393 P; 26.09.2018 US 201862736495 P; 19.11.2018 US 201862769012 P
(43) Date of publication of application: 21.04.2021
(73) Proprietor: Synventive Molding Solutions, Inc., Peabody, MA 01960 (US)
(72) Inventor: GALATI, Vito, Rowley, MA 01969 (US); LOGRASSO, Salvatore, A., Beverly, MA 01915 (US); BERNIER, Albert, R., Gloucester, MA 01930 (US)
(74) Representative: Fuchs Patentanwälte Partnerschaft mbB
(86) International application number: PCT/US2019/046093
(87) International publication number: WO 2020/068285

(56) References cited:
- DE-A1- 19 860 797
- JP-A- H09 262 872
- JP-A- H11 156 895
- US-A1- 2006 088 619

## Description

### BACKGROUND OF THE INVENTION

Mechanisms for creating turbulence in the flow of injection fluid through the flow system of an injection molding system have used components that are driven axially and rotatably within the channel. Patent documents JP H09 262872 A and JP H11 156895 A disclose an injection molding apparatus comprising an injection molding machine that generates an injection fluid.

### SUMMARY OF THE INVENTION

The invention is set out in the independent claims. Preferred embodiments are set out in the dependent claims. As an illustrative example not according to the invention, there is provided an injection molding apparatus (5) comprising an injection molding machine (15) that generates an injection fluid (18), one or more upstream channels (19bfc, 40dfc) having a longitudinal flow axis (A2, A3) receiving the injection fluid (18) from the injection molding machine (15) at an upstream end and routing the injection fluid downstream toward a downstream end and one or more nozzle channels (42a), each nozzle channel having a longitudinal flow axis (A1) formed in an associated nozzle that receives the injection fluid from the one or more upstream channels at an upstream end and route the injection fluid downstream toward a downstream end,
wherein a spring, coil, wire, rod or cylinder (800) configured in the form or shape of a spiral or helix is disposed within and extending axially through one or more of the upstream channels and the nozzle channel, the spring, coil, wire, rod or cylinder being adapted to guide flow of injection fluid flowing downstream through the channels in a disrupted or discontinuous manner.

The spring, coil, wire, rod or cylinder (800) is preferably resiliently compressible and expandable at least under force exerted by the injection fluid injected into and through the one or more upstream channels and nozzle channel by the injection molding machine.

Such an apparatus can further comprise an actuator (940) interconnected to a valve pin (1040) comprised of a rod or shaft having an outer circumferential surface (1040s), the actuator being controllable to drive the valve pin upstream and downstream through the nozzle channel (42a).

The valve pin (107, 127, 147, 167, 187, 207, 227, 247, 1040) can comprise a rod or shaft having an outer circumferential surface that has one or more of a recess, relieved portion, bore or discontinuity formed within the outer circumferential surface that interacts with injection fluid flowing past or along the outer circumferential surface to cause the flowing injection fluid to flow in a turbulent, disrupted or mixing manner.

The valve pin can be controllably rotatable around an axis of the valve pin.

The valve pin typically has an axial length and a maximum cross sectional diameter at at least a selected position along the axial length of the valve pin and wherein the spiral or helix shaped spring, coil, wire, rod or cylinder has an inside helix diameter, an inside helix surface, an outside helix diameter and an outside helix surface, the inside helix diameter of the spring, coil, wire or cylinder being selected such that the inside helix surface contacts or engages the outer circumferential surface of the valve pin at at least the selected position along the axial length of the valve pin that has the maximum cross sectional diameter.

The one or more upstream channels (19bfc, 40dfc) and the nozzle channel (42a) typically each have an inside channel surface (19bs, 40dfcs, 22s), the spiral or helix shaped spring, coil, wire, rod or cylinder having an inside helix diameter (ID), an inside helix surface (800is), an outside helix diameter (OD) and an outside helix surface (800os), the spring, coil, wire, rod or cylinder typically being adapted such that the outside helix surface (800os) engages or contacts the inside channel surface (19bs, 40dfcs, 22s) of one or more of the upstream channels and the nozzle channel.

The one or more upstream channels and the nozzle channel typically each have an inside channel surface, the spiral or helix shaped spring, coil, wire, rod or cylinder having an inside helix diameter, an inside helix surface, an outside helix diameter and an outside helix surface, the spring, coil, wire, rod or cylinder that are typically adapted such that the outside helix surface engages or contacts the inside channel surface of one or more of the upstream channels and the nozzle channel. According to the invention there is provided an injection molding machine (15) that generates an injection fluid (18), one or more upstream channels (19bfc, 40dfc, 40mc) having a longitudinal flow axis (A2, A3) receiving the injection fluid (18) from the injection molding machine (15) at an upstream end and routing the injection fluid downstream toward a downstream end and one or more nozzle channels (42a), each nozzle channel (42a) having a longitudinal flow axis (A1) formed in an associated nozzle that receives the injection fluid from the one or more upstream channels (19bfc, 40dfc) at an upstream end and route the injection fluid downstream toward a downstream end,
wherein a spring, coil, wire, rod or cylinder (800) configured in the form or shape of a spiral or helix is disposed within and extending axially through one or more of the upstream channels (19bfc, 40dfc, 40mc) and the nozzle channel (42a), the spring, coil, wire, rod or cylinder having an axial length (AL, DCL) and a right handed (800r) or left handed (800I) spiral or helix.

According to the invention, such an apparatus further comprises an actuator (940) interconnected to a valve pin (1040) comprised of a rod or shaft having an outer circumferential surface (1040s), the actuator being controllable to drive the valve pin upstream and downstream through the nozzle channel (42a).

In such an apparatus the spring, coil, wire, rod or cylinder can be circular (800cs), oval, square, triangular or rectangular (800fs) in cross section.

The spring, coil, wire, rod or cylinder can have one or more selected pitches (P) extending over one or more selected portions of the axial length (AL, DCL).

The spiral spring, coil, wire, rod or cylinder typically has an axial aperture (AXA) through which the valve pin (1040) is disposed, the valve pin having a circumferential surface (PCS) that is smooth.

According to the invention, the spiral spring, coil, wire, rod or cylinder has an axial aperture (AXA) through which the valve pin (1040) is disposed, the valve pin having a circumferential surface (1040cs, OS) that is smooth or has a discontinuity (11, 13, 115, 17, 19, 21, 23, 25, 800sgr, 800sgl) formed within the outer circumferential surface (1040cs, OS) that interacts with injection fluid flowing past or along the outer circumferential surface (1040cs, OS) to cause the flowing injection fluid to flow in a turbulent, disrupted or mixing manner.

The spiral spring, coil, wire, rod or cylinder can have one or more portions extending along different portions of the axial length of the spring that have inside diameters (IDI1u, IDs1u, IDs1, IDI, IDI2d, IDs2d) that are greater than, lesser than or different from each other.

The spiral spring, coil, wire, rod or cylinder can have one or more portions extending along different portions of the axial length of the spring that have outside diameters (ODs1, ODI1, ODs2) that are greater than, lesser than or different from each other.

The spring, coil, wire, rod or cylinder (800) is preferably resiliently compressible and expandable at least under force (IP, RP) exerted by the injection fluid injected into and through the one or more upstream channels and nozzle channel by the injection molding machine.

The valve pin can be controllably rotatable around an axis of the valve pin.

The valve pin typically has an axial length and a maximum cross sectional diameter at at least a selected position along the axial length of the valve pin, the spiral or helix shaped spring, coil, wire, rod or cylinder having an inside helix diameter (ID), an inside helix surface (800is), an outside helix diameter (OD) and an outside helix surface (800os), the inside helix diameter (ID) of the spring, coil, wire or cylinder being selected such that the inside helix surface (800is) contacts or engages the outer circumferential surface (1040s) of the valve pin (1040) at at least the selected position along the axial length of the valve pin that has the maximum cross sectional diameter (PD).

The one or more upstream channels (19bfc, 40dfc) and the nozzle channel (42a) typically each have an inside channel surface (19bs, 40dfcs, 22s), the spiral or helix shaped spring, coil, wire, rod or cylinder having an inside helix diameter (ID), an inside helix surface (800is), an outside helix diameter (OD) and an outside helix surface (800os), the spring, coil, wire, rod or cylinder typically being adapted such that the outside helix surface (800os) engages or contacts the inside channel surface (19bs, 40dfcs, 22s) of one or more of the upstream channels and the nozzle channel.

The one or more upstream channels (40dfc) and the nozzle channel (42a) typically each have an inside channel surface (42as, 40dfcis), the spiral or helix shaped spring, coil, wire, rod or cylinder having an inside helix diameter (ID), an inside helix surface (800is), an outside helix diameter (OD) and an outside helix surface (800os), the spring, coil, wire, rod or cylinder being adapted such that the outside helix surface (800os) engages or contacts the inside channel surface (42as, 40dfcis) of one or more of the upstream channels (40dfc) and the nozzle channel (42a).

The spring, coil, wire, rod or cylinder can have an upstream end (800ue), the nozzle channel (42a) or the manifold channel (40mc) having a stop (40r) or an inside surface (40mcs) adapted to engage and choke (40mcd) or stop (40r) the upstream end (800ue, 800ued) of the spring from travelling upstream.

The spring, coil, wire, rod or cylinder can have a downstream end (800de), the nozzle channel having a stop (42ir) or an inside surface (42ais) adapted to engage (42ir) and choke (42aded, 800deod) or stop (42ir) the downstream end (800de) of the spring from travelling downstream.

The inside and outside diameters of a spring 800r, 800I that is disposed within a downstream channel 42a can be varied or different along any selected one or more portions along the axial length DCL of the downstream channel.

In another aspect of the invention there is provided a method of injecting and disrupting flow of an injection fluid to a mold cavity comprising injecting the injection fluid to the mold cavity using any of the apparatuses described herein.

**As** another illustrative example not according to the invention, there is provided an injection molding apparatus (5) comprising an injection molding machine (15) that generates an injection fluid (18), one or more upstream channels (19bfc, 40dfc) having a longitudinal flow axis (A2, A3) receiving the injection fluid (18) from the injection molding machine (15) at an upstream end and routing the injection fluid downstream (18d) toward a downstream end and one or more nozzle channels (42a), each nozzle channel (42a) having a longitudinal flow axis (A1) formed in an associated nozzle (22) that receives the injection fluid (18) from the one or more upstream channels (19bfc, 40dfc) at an upstream end and route the injection fluid downstream toward a downstream end (22e),
wherein one or more of the upstream channels (19bfc, 40dfc) or one or more of the nozzle channels (42a) have an interior wall surface (19bs, 40dfcs, 22s) having a flow disruptive contour (700, 701, 702) formed in the interior wall surface (22s, 19bs, 40dfcs) that guides the injection fluid longitudinally (A1, A2, A3) in a downstream direction.

Preferably the flow disruptive contour (700, 701, 702) is adapted to create a turbulence or disturbance in the flow of the injection fluid (18) such that the fluid (18) that flows through a gate (30g) or a distal end exit aperture (22e) of the nozzle channel (42a) into a cavity (30) of a mold (42) is thoroughly mixed.

The one or more upstream channels and the one or more nozzle channels can have a channel length extending from the upstream end to the downstream end, the flow disruptive contour extending a selected portion of the channel length.

The flow disruptive contour can extend the entirety of the channel length.

The flow disruptive contour (700, 701, 702) typically comprises a groove, a spiral, a rifling, a helix one or more pockets, one or more dimples, or one or more discontinuities formed within or on one or more of the interior wall surfaces (22s, 19bs, 40dfcs).

The flow disruptive contour is preferably adapted to guide the injection fluid flowing downstream through an upstream channel or a nozzle channel in a direction that rotates (R1, R2, R3) around the longitudinal axis (A1, A2, A3).

The flow disruptive contour preferably comprises a spiral groove (700, 701, 702) having a selected depth and length along the longitudinal flow axis (A1, A2, A3), pitch, handedness, flank, flank curvature, flank diameter, flank angle, pitch diameter, pitch line, crest contour, crest curvature, addendum and dedendum.

The flow disruptive contour (700, 701, 702) is preferably adapted to increase the velocity or rate of travel of the injection fluid (18) in a downstream direction relative to a velocity or rate of travel where a channel has a smooth continuous surface contour.

As another illustrative example not according to the invention, there is provided an injection molding apparatus (5) comprising an injection molding machine (15) that generates an injection fluid (18), one or more upstream channels (19bfc, 40dfc, 40mc) having a longitudinal flow axis (A2, A3) receiving the injection fluid (18) from the injection molding machine (15) at an upstream end and routing the injection fluid downstream toward a downstream end and one or more nozzle channels (42a), each nozzle channel (42a) having a longitudinal flow axis (A1) formed in an associated nozzle that receives the injection fluid from the one or more upstream channels (19bfc, 40dfc) at an upstream end and route the injection fluid downstream toward a downstream end,
either wherein a spring, coil, wire, rod or cylinder (800) configured in the form or shape of a spiral or helix is disposed within and extending axially through one or more of the upstream channels (19bfc, 40dfc, 40mc) and the nozzle channel (42a), the spring, coil, wire, rod or cylinder having an axial length (AL, DCL) and a right handed (800r) or left handed (800I) spiral or helix,
or wherein one or more of the upstream channels (19bfc, 40dfc) or one or more of the nozzle channels (42a) have an interior wall surface (19bs, 40dfcs, 22s) having a flow disruptive contour (700, 701, 702) formed in the interior wall surface (22s, 19bs, 40dfcs) that guides the injection fluid longitudinally (A1, A2, A3) in a downstream direction,
the apparatus including an actuator (940, 941, 942) interconnected to a valve pin (1040, 1041, 1042), the actuator being adapted to drive the valve pin axially through the downstream nozzle channel (42a) to open and close a gate (32, 34) to a cavity (30) of a mold (30m), the valve pin including a groove, indent, dimple, bump or discontinuity formed on a circumferential surface of the valve pin that disrupts flow of the injection fluid (18) through the nozzle channel (42a).

As yet another illustrative example not according to the invention, there is provided an injection molding apparatus (5) comprising an injection molding machine (15) that generates an injection fluid (18), one or more upstream channels (19bfc, 40dfc, 40mc) having a longitudinal flow axis (A2, A3) receiving the injection fluid (18) from the injection molding machine (15) at an upstream end and routing the injection fluid downstream toward a downstream end and one or more nozzle channels (42a), each nozzle channel (42a) having a longitudinal flow axis (A1) formed in an associated nozzle that receives the injection fluid from the one or more upstream channels (19bfc, 40dfc) at an upstream end and route the injection fluid downstream toward a downstream end,
either wherein a spring, coil, wire, rod or cylinder (800) configured in the form or shape of a spiral or helix is disposed within and extending axially through one or more of the upstream channels (19bfc, 40dfc, 40mc) and the nozzle channel (42a), the spring, coil, wire, rod or cylinder having an axial length (AL, DCL) and a right handed (800r) or left handed (800I) spiral or helix,
or wherein one or more of the upstream channels (19bfc, 40dfc) or one or more of the nozzle channels (42a) have an interior wall surface (19bs, 40dfcs, 22s) having a flow disruptive contour (700, 701, 702) formed in the interior wall surface (22s, 19bs, 40dfcs) that guides the injection fluid longitudinally (A1, A2, A3) in a downstream direction,
the apparatus including an actuator (940, 941, 942) interconnected to a valve pin (1040, 1041, 1042), the actuator being adapted to drive the valve pin axially through the downstream nozzle channel (42a) to open and close a gate (32, 34) to a cavity (30) of a mold (30m), the controller including a program containing instructions adapted to instruct the actuator to drive the valve pin upstream during the course of a selected segment of an upstream portion of an injection cycle at a velocity that is reduced relative to a maximum velocity at which the actuator is adapted to drive the valve pin.

### BRIEF DESCRIPTION OF THE DRAWINGS

The above and further advantages of the invention may be better understood by referring to the following description in conjunction with the accompanying drawings. The Figures 1AA-1 GG are not according to the invention and are shown for illustrative purposes only. In the drawings:
Fig. 1 is a side sectional view of an injection molding system that incorporates or can incorporate the fluid flow channels having discontinuous or flow disruptive grooves and the like as described herein in addition to other operational and design components and elements described herein.
Figs. 1A-1E are schematic cross-sectional close-up views of a center and a lateral gates of the Figs. 1 and 2 apparatuses showing various stages of the progress of injection during a single injection cycle.
Fig. 1AA is a side sectional view of the inlet, hotrunner, barrel and nozzle components of a system similar to the Figs. 1 and 2 systems where only the downstream nozzle channel includes a spiral or helical groove formed into the interior surface of the nozzle channel.
Fig. 1BB is a side sectional view of inlet, hotrunner and nozzle components of a system similar to the Figs. 1, 2 systems where both an inlet channel, an upstream manifold channel and the downstream nozzle channel all include a spiral or helical groove formed into the interior surface of their respective channels.
Fig. 1CC is an enlarged view of the nozzle, valve pin, nozzle tip and other nozzle channel components of the Fig. 1AA system.
Fig. 1DD is an enlarged view of the nozzle body and nozzle channel components of the Fig. 1AA system.
Fig. 1EE is a top perspective view of the nozzle body of Fig. 1DD.
Fig. 1FF is a top plan view of the nozzle body of Fig. 1DD.
Fig. 1GG is a two dimensional plot of the pitch of a portion of one configuration of a spiral groove formed in one or more of the grooved channels as shown in Figs. 1AA and 1BB.
Figs. 1HH-1LL show views similar to Figs. 1AA, 1 BB where instead of a spiral groove, a right handed spiral rod, cylinder, wire or spring is disposed within and throughout the fluid flow channels including the inlet flow channel, the manifold distribution channel and the downstream nozzle channel.
Fig. 1MM is a sectional view of an injection molding apparatus showing a left handed spiral or helical spring having a circular cross section disposed throughout the axial length of the bores or fluid flow channels of the inlet from the injection molding machine barrel to the heated manifold, a distribution flow channel within the manifold, a curved flow channel within a manifold plug that is disposed within the manifold and the flow channel of a downstream nozzle, the spring extending into the flow bore or channel of a distal nozzle insert that terminates in the gate to the mold cavity.
Fig. 1NN is an enlarged side view of the downstream end portion of the nozzle channel of the nozzle component of Figs. 1HH-1LL showing the diameter size of the spiral rod, cylinder, wire or spring relative to the size of the valve pin disposed within the nozzle channel.
Fig. 1OO is a sectional view similar to Fig. 1MM showing a left handed spiral spring having a rectangular cross section extending from the upstream end of a nozzle channel downstream through the nozzle channel terminating at the upstream end of the downstream nozzle insert with a valve pin having a right handed spiral groove bored within the circumferential surface of the pin extending axially through the center aperture of the spiral spring.
Fig. 1PP is an enlarged sectional view of the nozzle insert showing the distal end configuration of the insert functioning to hold or stop movement of the distal end of the spiral spring from extending past the gate.
Fig. 1QQ is an enlarged sectional view of the upstream end of the Fig. 1PP spring and the manifold flow channel showing a stop or interference portion of the manifold block or body configured to interfere with or act as a stop against which the upstream end surface of the spring engages to prevent the spring from extending past the stop or interference portion of the manifold.
Fig. 1RR is a view similar to Fig. 1OO showing a left handed spiral spring with a valve pin disposed through the central aperture of the spring, the spring having a left handed spiral groove bored within its circumferential surface.
Fig. 1SS is an enlarged sectional view of the upstream end of the Fig. 1SS spiral spring and manifold channel bore that is configured to stop or prevent the upstream end of the spring from moving upstream past a choke or stop point in the manifold channel or bore, the manifold channel or bore being disposed in a plug that is disposed within a complementary plug receiving bore in the manifold.
Fig. 1TT is an enlarged sectional view of the downstream end of the Fig. 1PP spring and the channel insert showing a stop or interference portion of the channel insert configured to interfere with or act as a stop against which the downstream end surface of the spring engages to prevent the spring from extending past the stop or interference portion of the channel insert

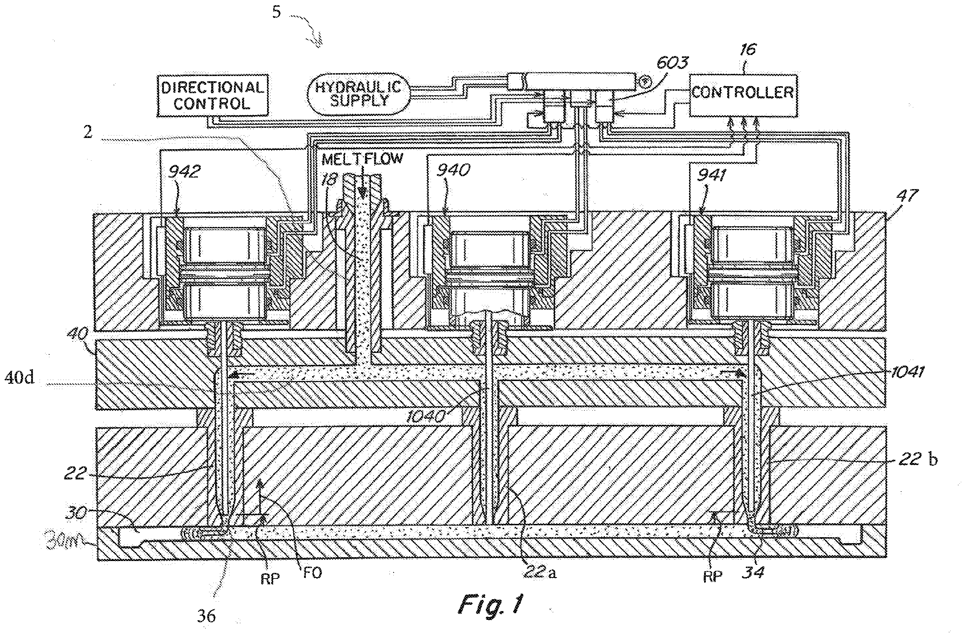

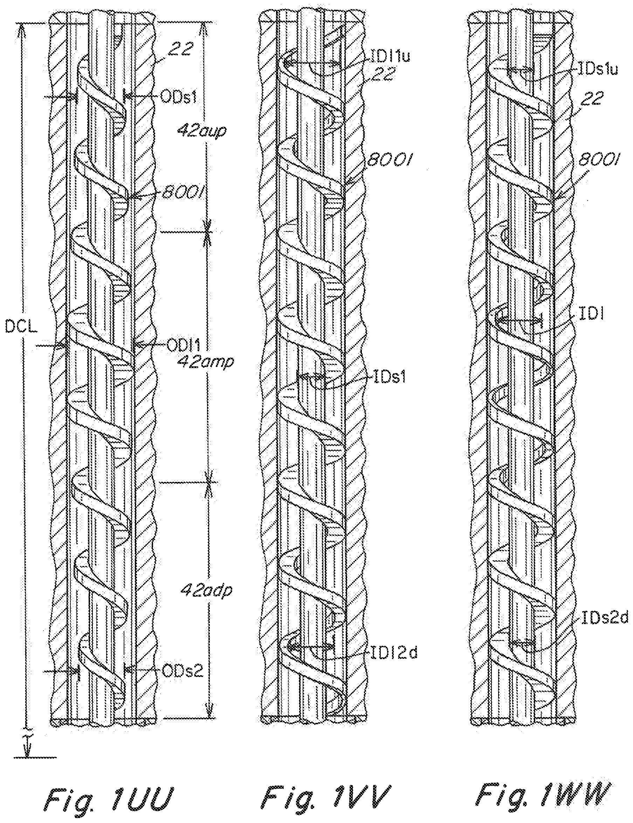

Fig. 1UU is a sectional view of an embodiment of a left handed spiral spring disposed throughout the channel length of a downstream nozzle where the spring is configured such that along an upstream end portion of the spring the outside diameter of the spiral spring is less or smaller than the outside diameter of the spring that extends along an intermediate portion of the spring that is immediately downstream of the upstream end portion and further showing that the outside diameter of the spring extending along a downstream end portion of the spring is less or smaller than the outside diameter of the intermediate portion.
Fig. 1VV is a sectional view of an embodiment of a left handed spiral spring disposed throughout the channel length of a downstream nozzle where the spring is configured such that along an upstream end portion of the spring the inside diameter of the spiral spring is greater than the inside diameter of the spring that extends along an intermediate portion of the spring that is immediately downstream of the upstream end portion and further showing that the inside diameter of the spring extending along a downstream end portion of the spring is greater than the inside diameter of the intermediate portion.
Fig. 1WW is a sectional view of an embodiment of a left handed spiral spring disposed throughout the channel length of a downstream nozzle where the spring is configured such that along an upstream end portion of the spring the inside diameter of the spiral spring is less than the inside diameter of the spring that extends along an intermediate portion of the spring that is immediately downstream of the upstream end portion and further showing that the inside diameter of the spring extending along a downstream end portion of the spring is less than the inside diameter of the intermediate portion.
Fig. 2 is a view similar to Fig. 1 of a system incorporating electric motors as the actuators for the valves.
Fig. 2A is a schematic cross-section of an embodiment of the invention showing multiple electrically powered or electric actuators 62 that simultaneously inject into separate cavities during a single injection cycle, each electric actuator being comprised of a motor 154, 174 that is interconnected to an axial shaft 158 that is in turn interconnected to a valve pin 1041 that enters 34 into separate cavities, the motors 62 each being controllably driven by an electronically programmable controller 176.
Fig. 2B is a schematic of another embodiment of the invention showing multiple electric actuators 62 that have a motor axis that are non coaxially arranged relative to the axis of interconnected valve pins 1041 that inject at different valve pin entry locations into the same mold cavity 15 in a cascade process.
Figs. 3A-3B show tapered end valve pin positions at various times and positions between a starting closed position as in Fig. 3A and various upstream opened positions, RP representing a selectable path length over which the velocity of withdrawal of the pin upstream from the gate closed position to an open position is reduced (via a controllable flow restrictor) relative to the velocity of upstream movement that the valve pin would normally have over the uncontrolled velocity path FOV when the hydraulic pressure is normally at full pressure and pin velocity is at its maximum.

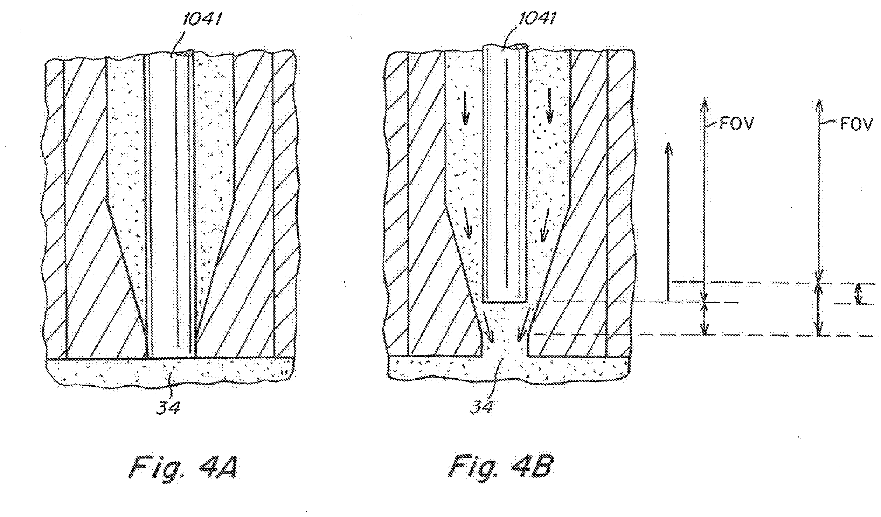

Figs. 4A-4B show a system having a valve pin that has a cylindrically configured tip end, the tips ends of the pins being positioned at various times and positions between a starting closed position as in Fig. 4A and various upstream opened positions, RP wherein RP represents a path of selectable length over which the velocity of withdrawal of the pin upstream from the gate closed position to an open position is reduced (via a controllable flow restrictor or electric actuator) relative to the velocity of upstream movement that the valve pin would normally have over the uncontrolled velocity path FOV when the hydraulic pressure of a hydraulic actuator is normally at full pressure and pin velocity is at its maximum.
Figs. 5A-5D are plots of examples of velocity of movement of a valve pin versus time of upstream movement during the course of injection cycles with different profiles of pin velocity.
Fig. 6A is a perspective view of one embodiment of a flow disrupting rod, pin or shaft having a flat groove or recess formed into the normally continuous smooth circumferential surface of a cylindrical rod or pin.
Fig. 6B is a side view of the Fig. 6A rod.
Fig. 6C is a sectional view along lines 6C-6C of Fig. 6B.

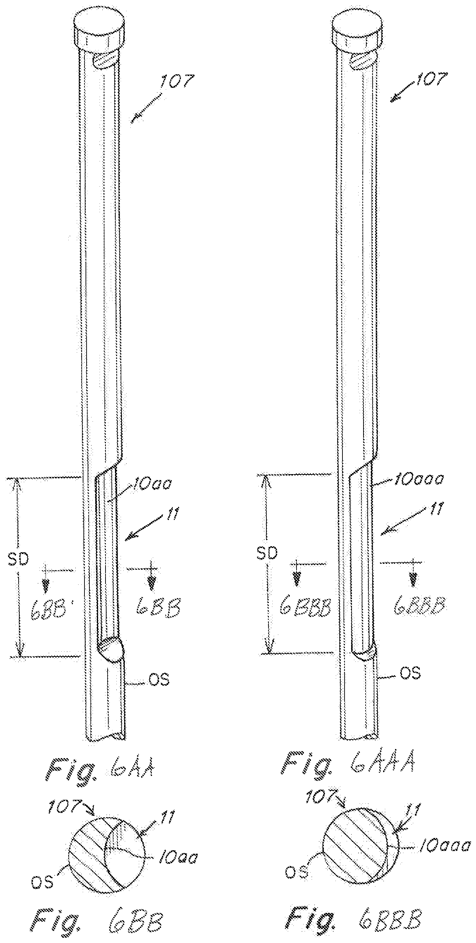

Fig. 6AA is a perspective view of another embodiment of a flow disrupting rod, pin or shaft having a concave surface indentation formed into the normally continuous smooth circumferential surface of a cylindrical rod or pin.
Fig. 6BB is a sectional view along lines 6BB-6BB of Fig. 6AA.

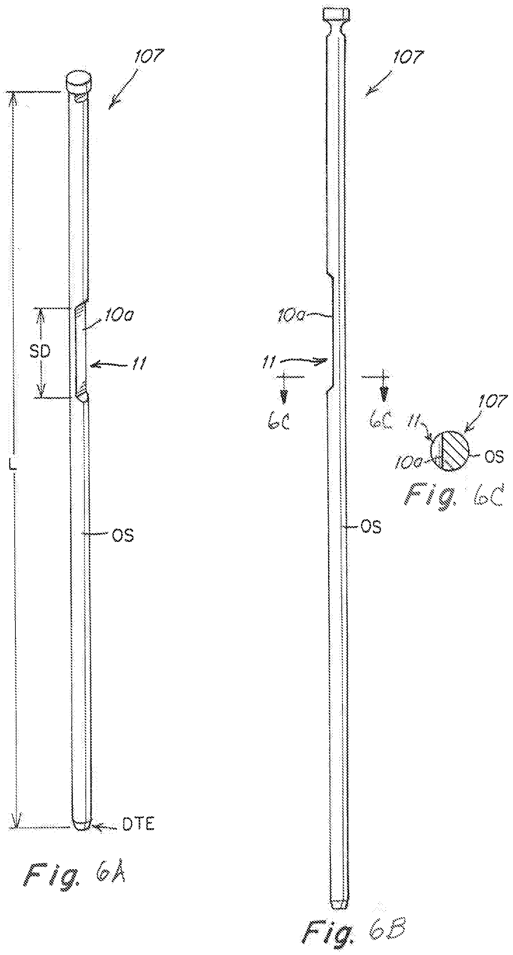

Fig. 6AAA is a perspective view of another embodiment of a flow disrupting rod, pin or shaft having a convex surface formed into the normally continuous smooth circumferential surface of a cylindrical rod or pin.
Fig. BBB is a sectional view along lines 6BBB-6BBB of Fig. 6AAA.

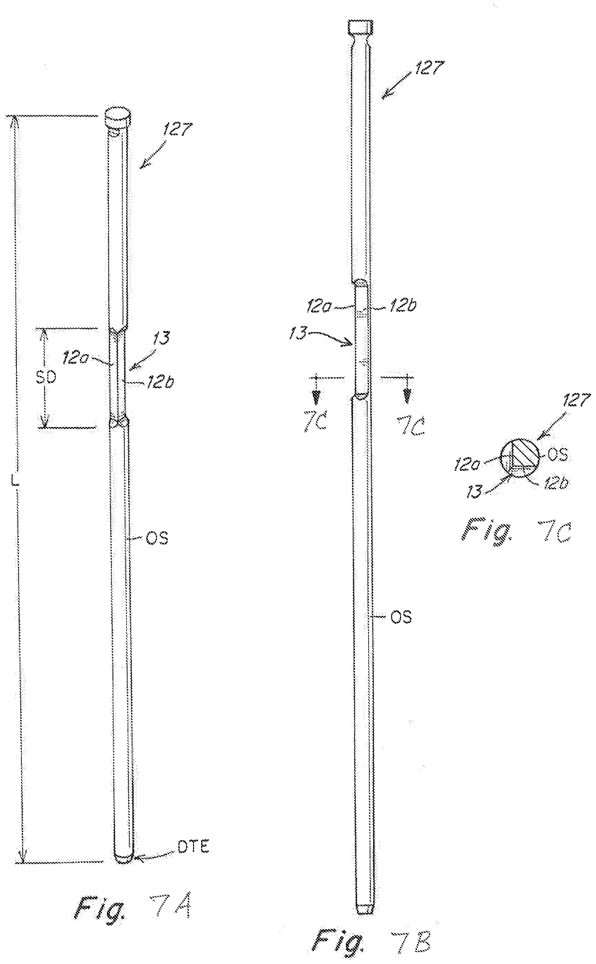

Fig. 7A is a perspective view of another embodiment of a flow disrupting rod, pin or shaft having a pair of flats formed at another position along the axial length of the rod or pin into the normally continuous smooth circumferential surface of an otherwise cylindrical rod or pin.
Fig. 7B is a side view of the Fig. 7A rod.
Fig. 7C is sectional view taken along lines 7C-7C of Fig. 7B.

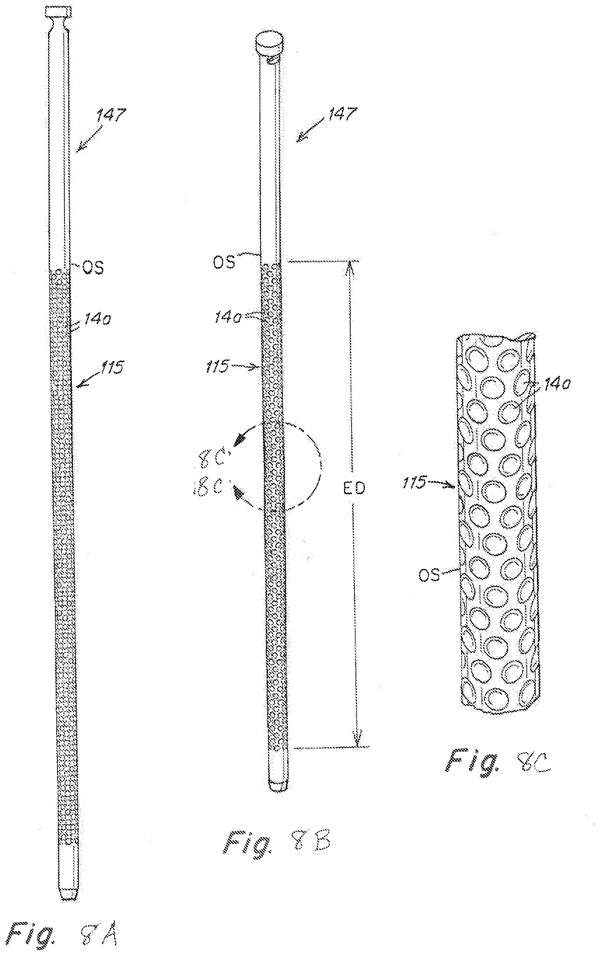

Fig. 8A is a side view of another embodiment of a flow disrupting rod, pin or shaft having multiple dimples formed into the normally continuous smooth circumferential surface of an otherwise cylindrical rod or pin.
Fig. 8B is a perspective view of the Fig. 8A rod.
Fig. 8C is an enlarged view of a portion of the dimpled surface of the Figs. 8A, 8B rod or pin taken within circle 8C-8C of Fig. 8B.

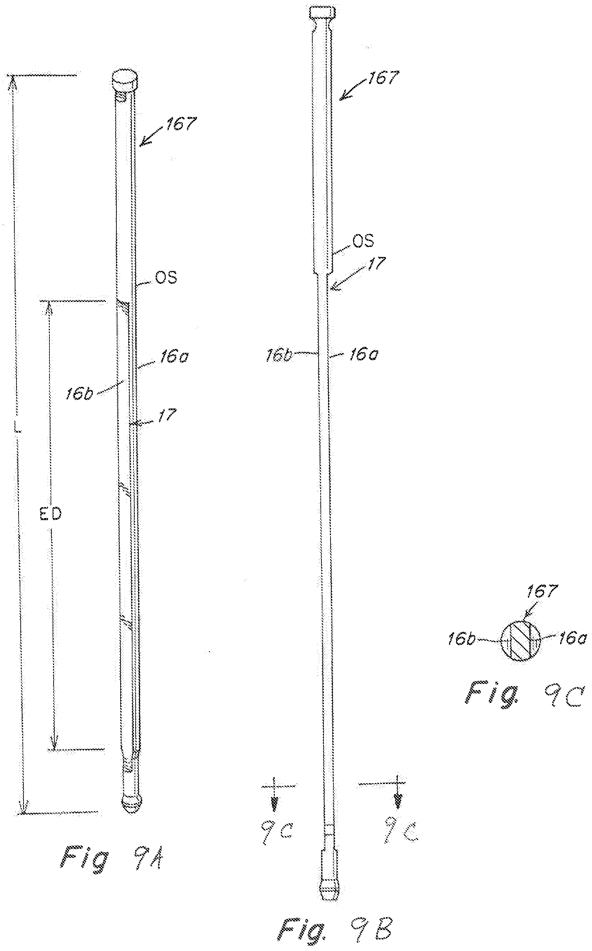

Fig. 9A is a perspective view of one embodiment of a flow disrupting rod, pin or shaft having a pair of 180 degree opposing flats or flat grooves or recesses formed into the normally continuous smooth circumferential surface of an otherwise cylindrical rod or pin.
Fig. 9B is a side view of the Fig. 9A rod.
Fig. 9C is a sectional view taken along lines 9C-9C of Fig. 9B.

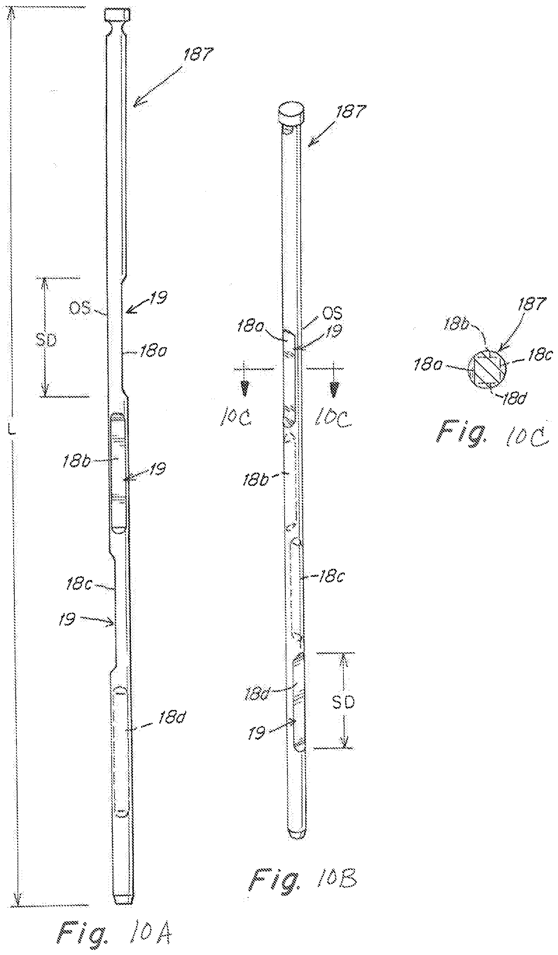

Fig. 10A is a side view of another embodiment of a flow disrupting rod, pin or shaft having multiple flats or flat grooves or recesses formed along multiple selected lengths along the axis of the rod or pin, the flats or grooves being formed into the normally continuous smooth circumferential surface of an otherwise cylindrical rod or pin.
Fig. 10B is a perspective view of the Fig. 10A rod.
Fig. 10C is sectional view taken along lines 10C-10C of Fig. 10B.

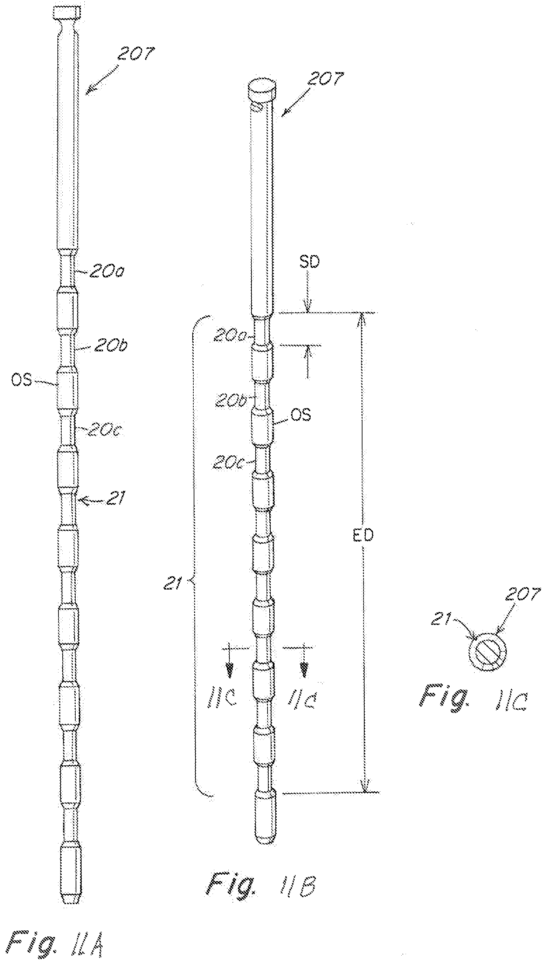

Fig. 11A is a side view of another embodiment of a flow disrupting rod, pin or shaft having multiple graduated reduced diameter grooves formed at multiple locations along the axial length of the rod or pin, the grooves being formed into the normally continuous smooth circumferential surface of an otherwise cylindrical rod or pin.
Fig. 11B is a perspective view of the Fig. 11A rod.
Fig. 11C is sectional view taken along lines 11C-11C of Fig. 11B.

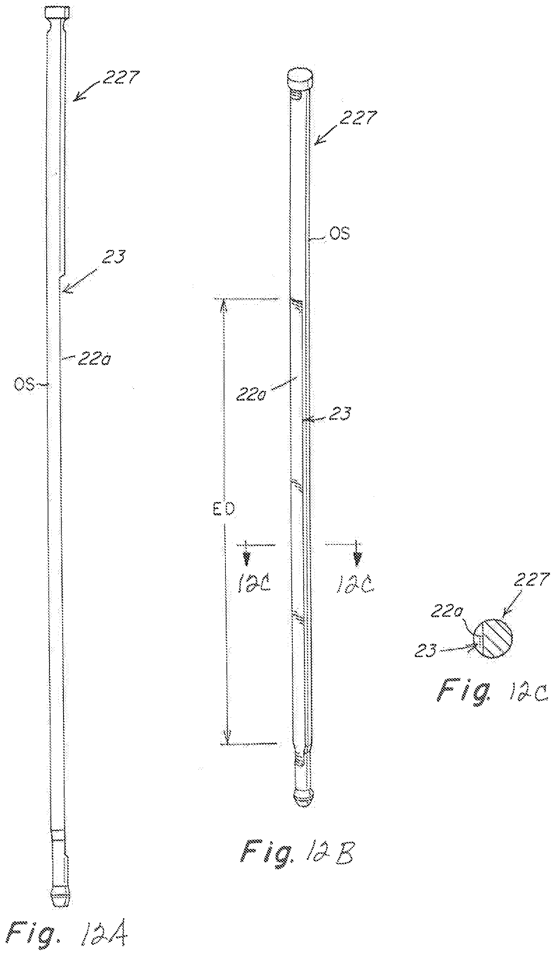

Fig. 12A is a side view of another embodiment of a flow disrupting rod, pin or shaft having an elongated flat or flat groove or recess formed into the normally continuous smooth circumferential surface of a cylindrical rod or pin.
Fig. 12B is a perspective view of the Fig. 12A rod.
Fig. 12C is sectional view taken along lines 12C-12C of Fig. 12B.

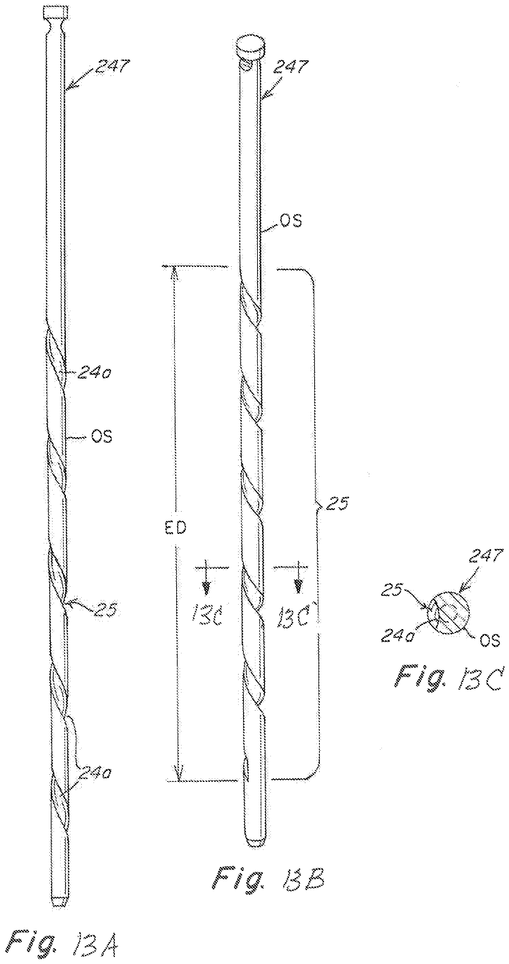

Fig. 13A is a side view of another embodiment of a flow disrupting rod, pin or shaft having a spiral groove or recess formed into the normally continuous smooth circumferential surface of an otherwise cylindrical rod or pin.
Fig. 13B is a perspective view of the Fig. 13A rod.
Fig. 13C is sectional view taken along lines 13C-13C of Fig. 13B.

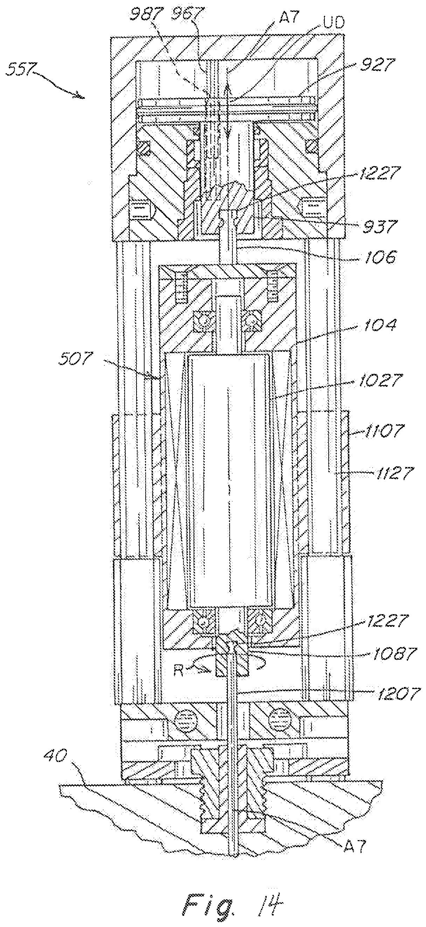

Fig. 14 is a side view of an actuator mounted to a manifold with an interconnected valve pin, the actuator having both linear and rotational drive mechanisms for driving a valve pin in either or both an axially linear direction or rotationally around the axis of the pin.

### Detailed Description

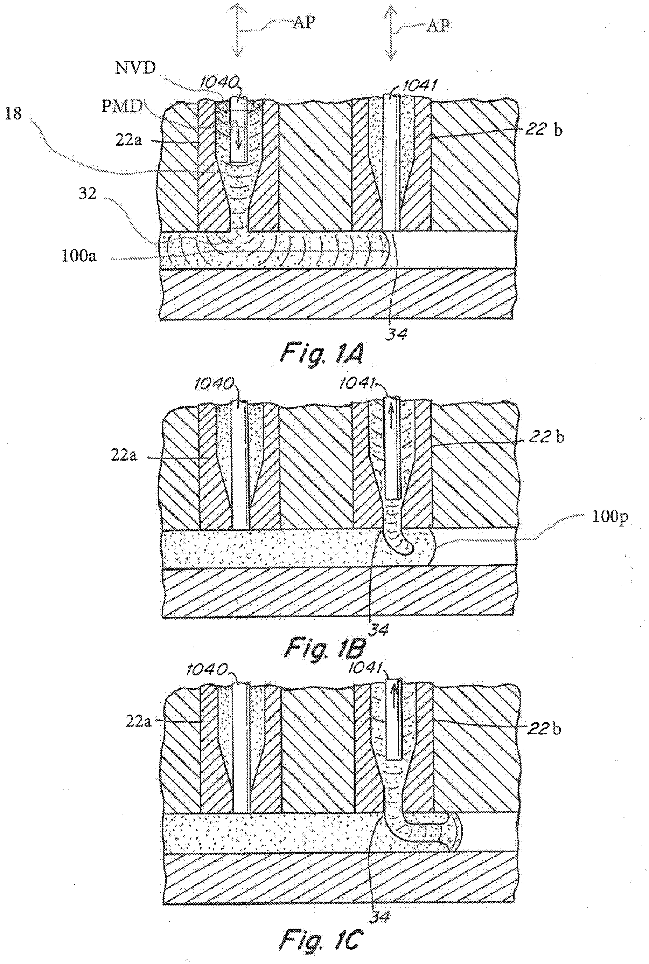

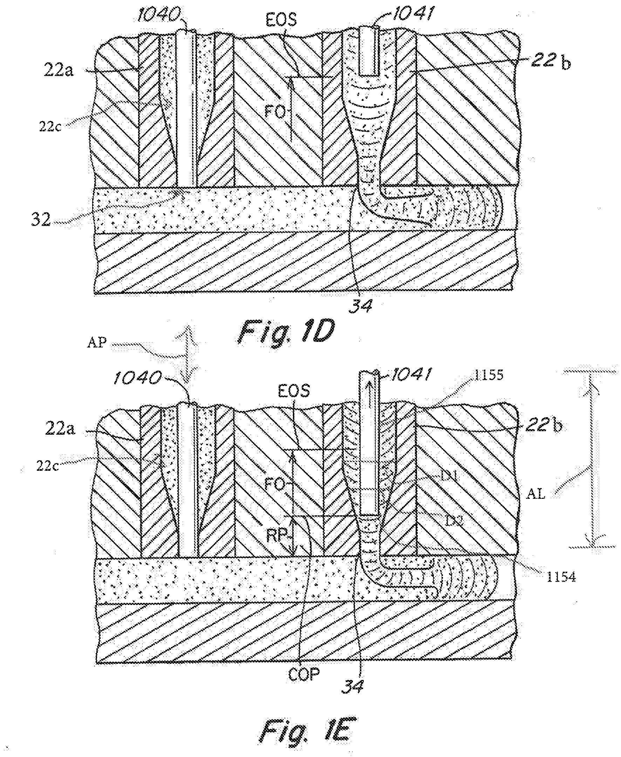

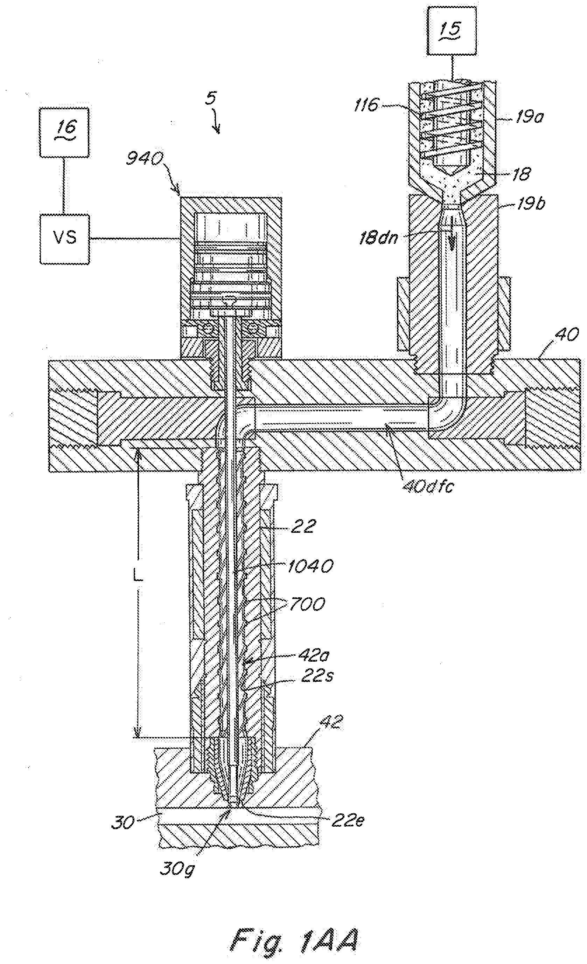

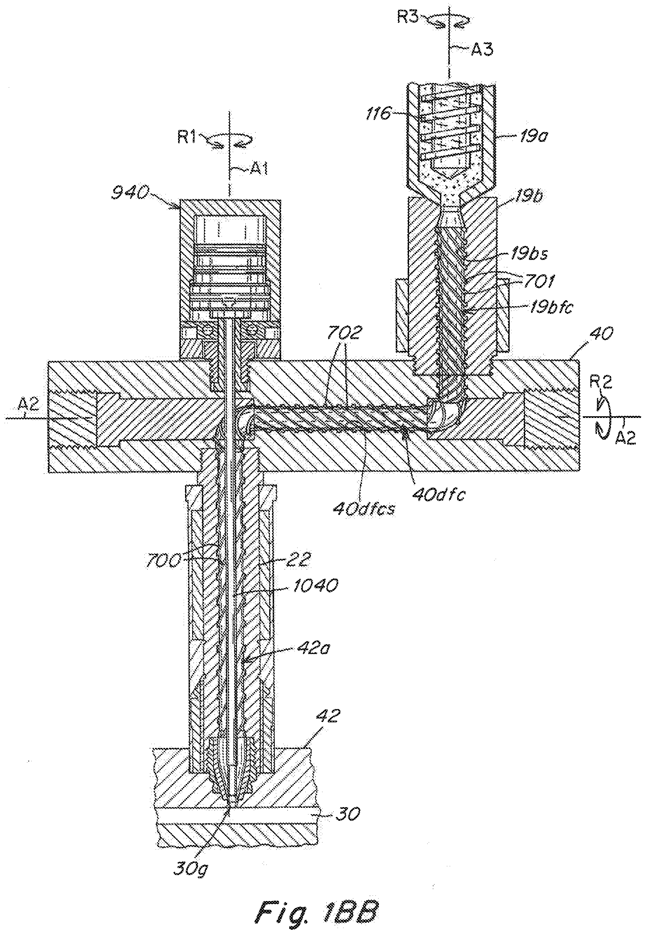

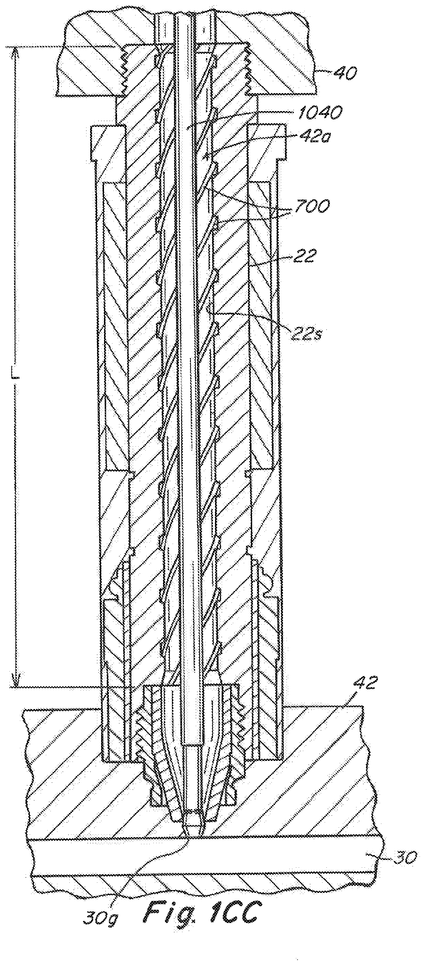

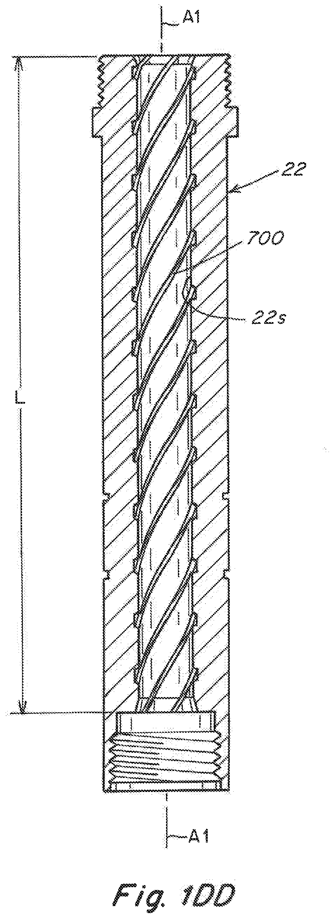

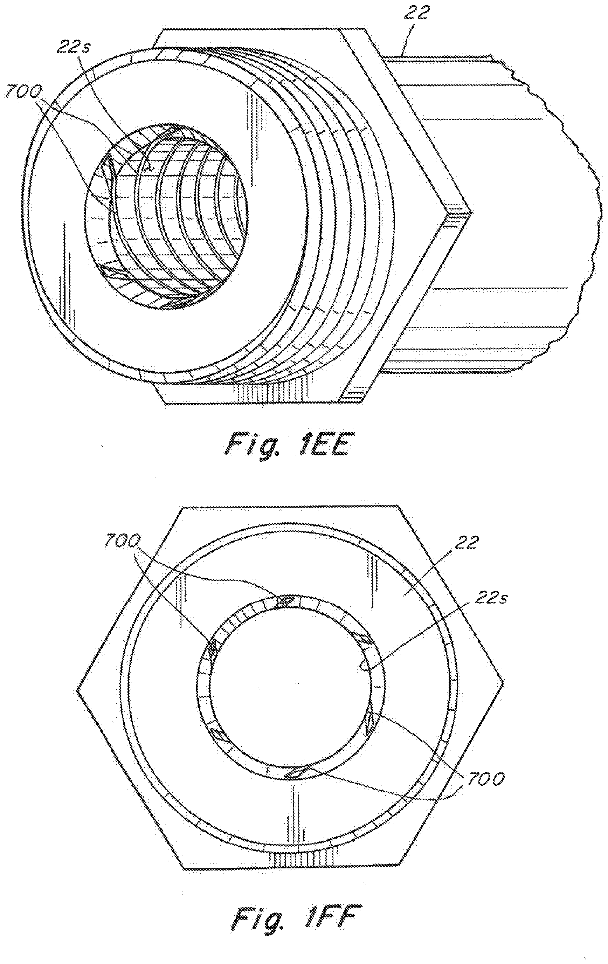

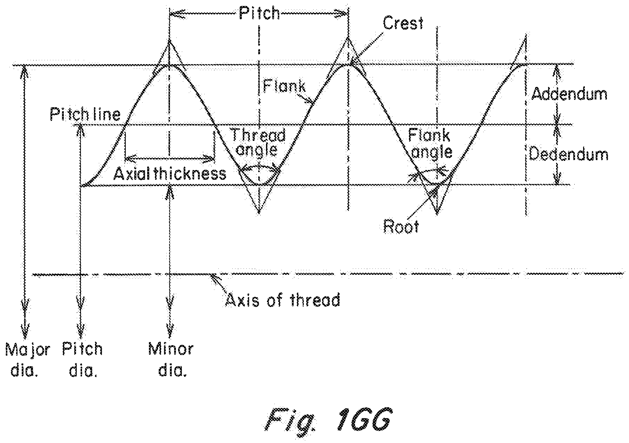

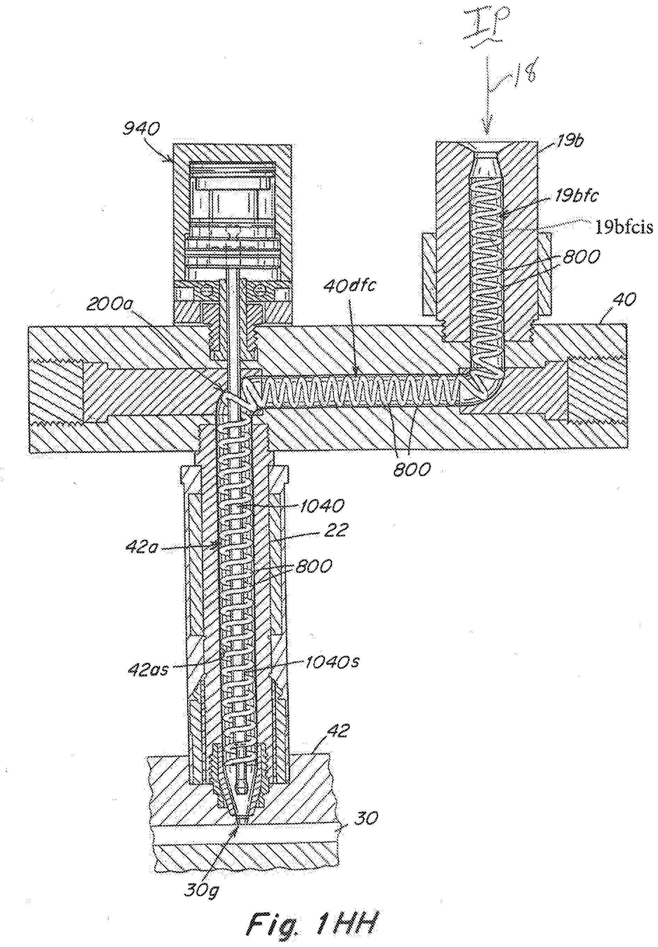

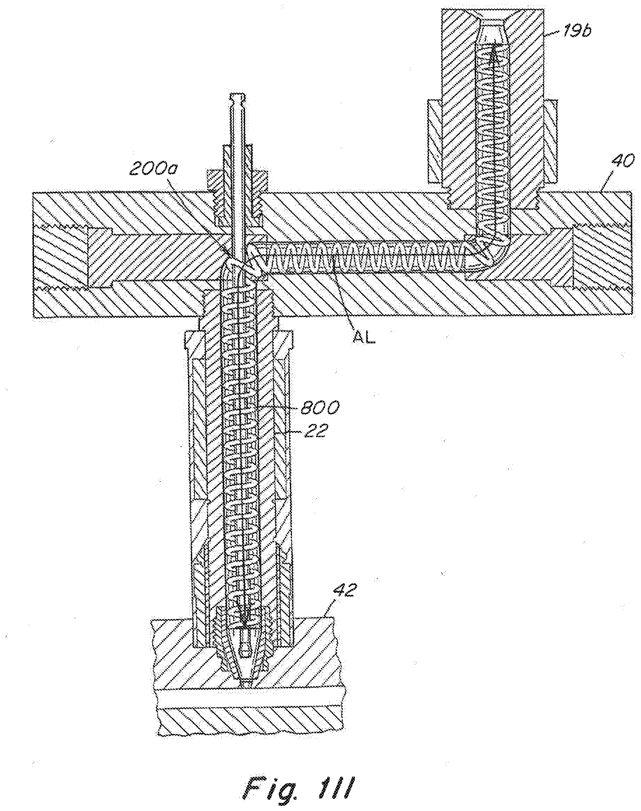

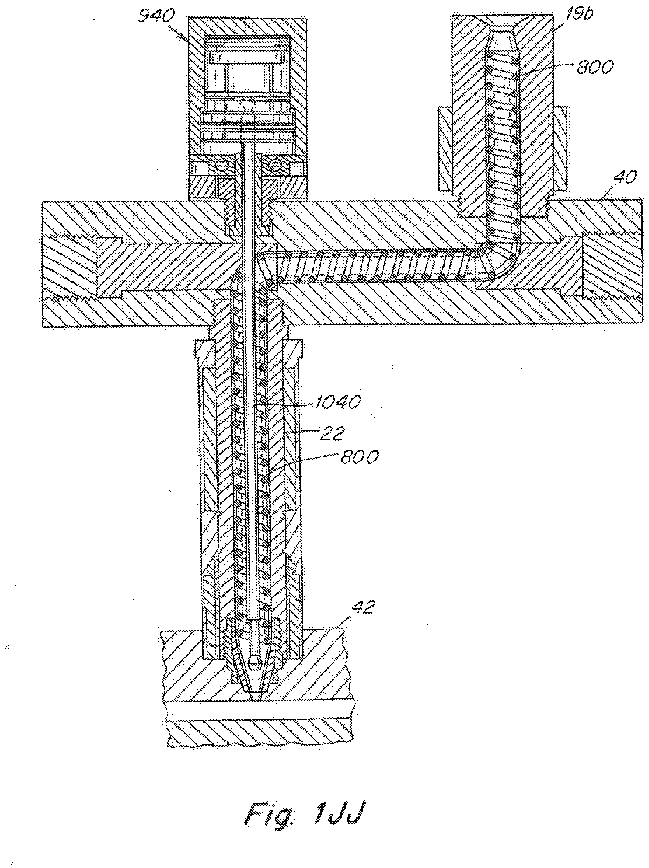

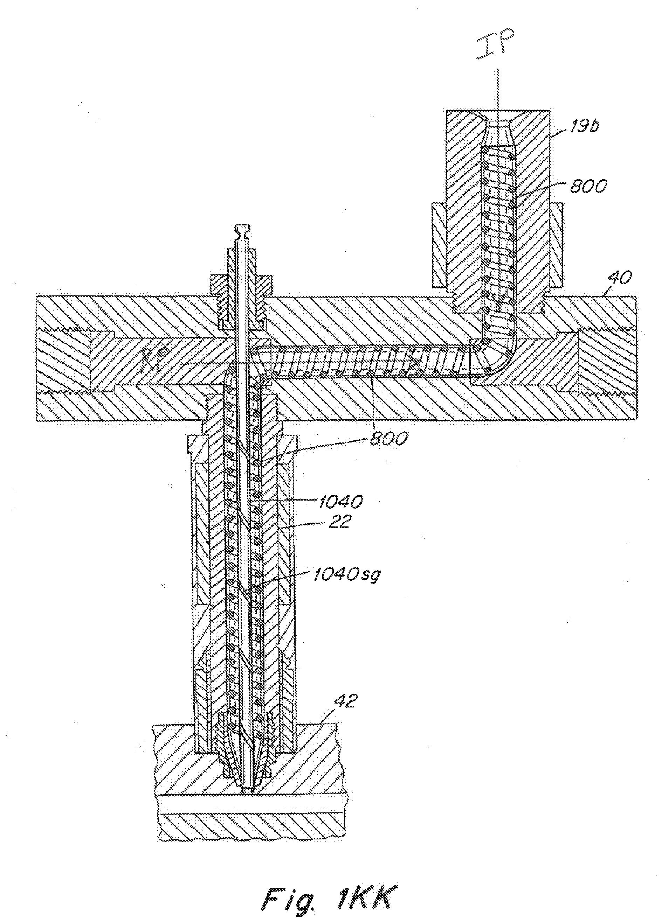

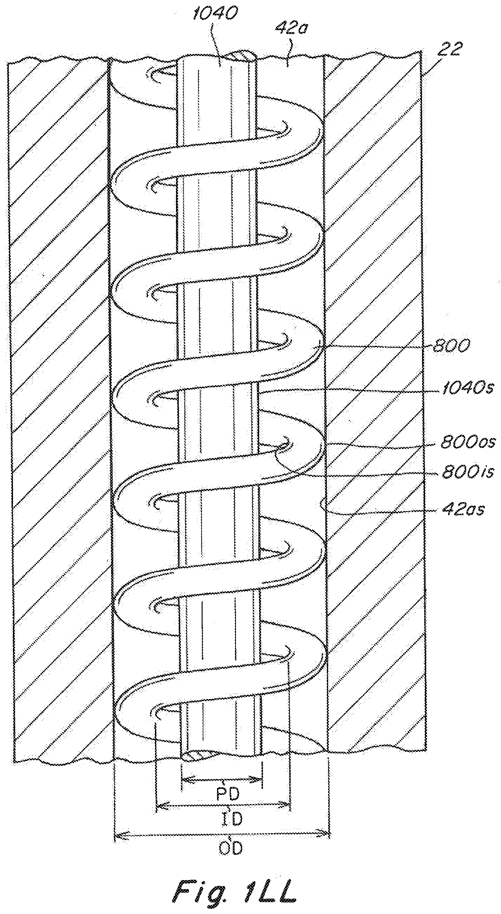

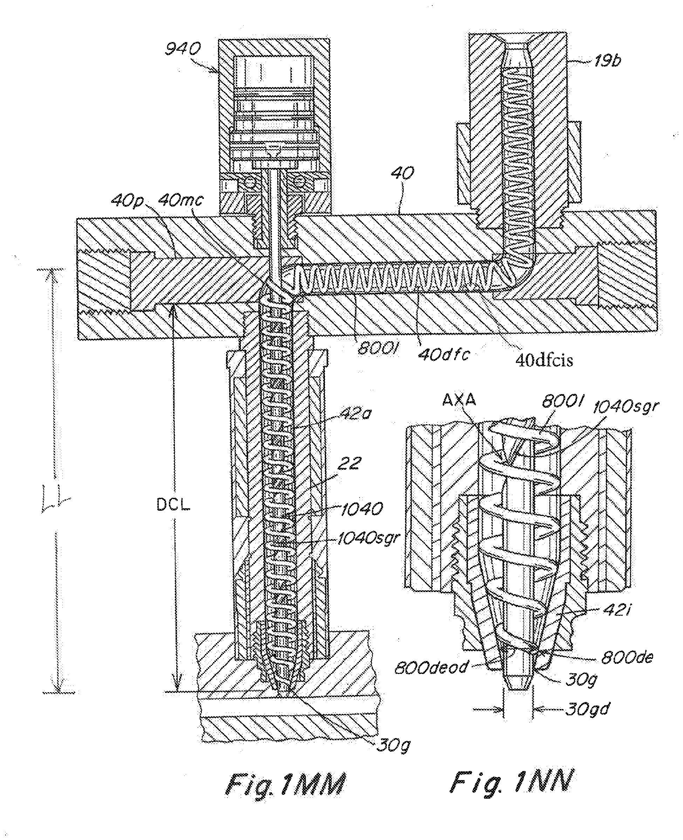

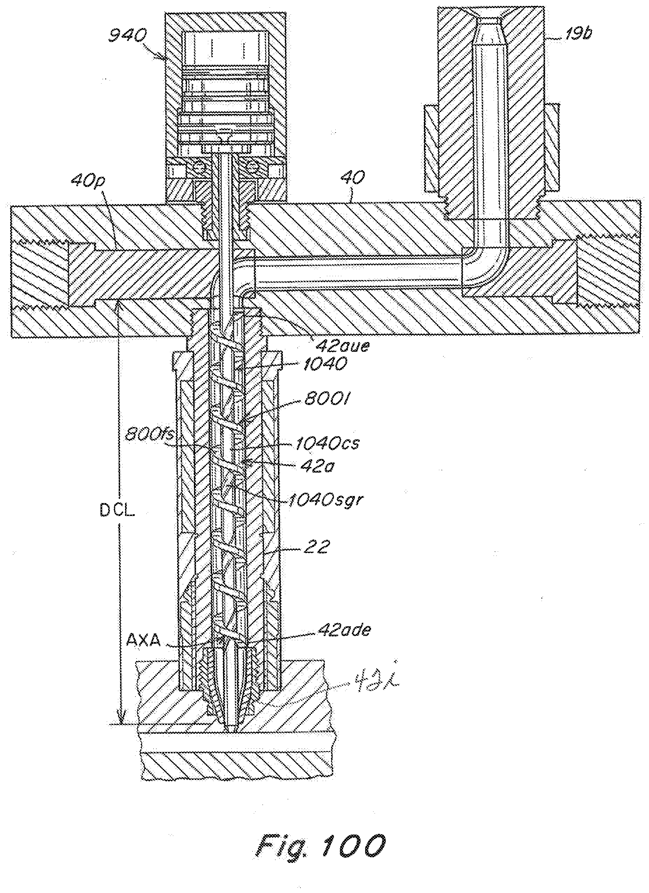

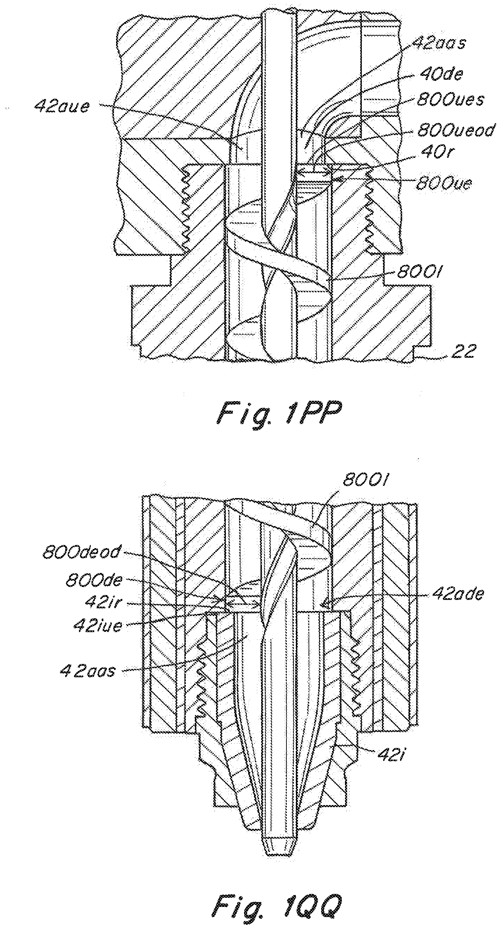

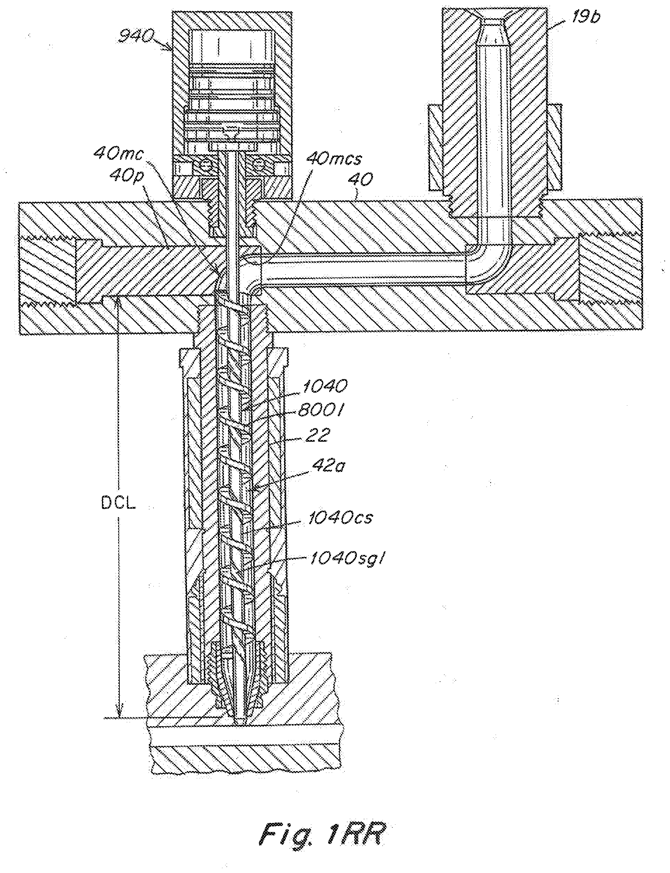

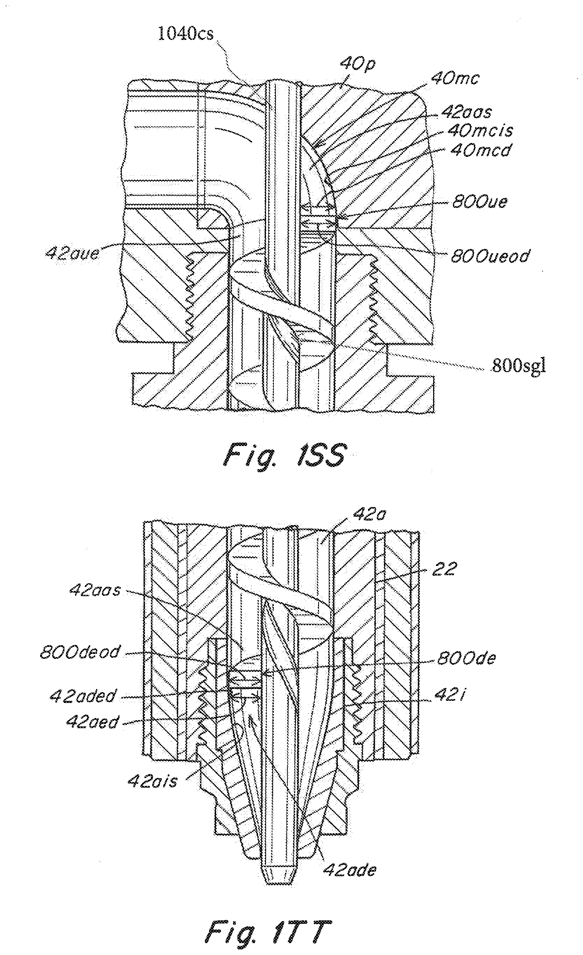

Figure 1 shows an injection molding system 5 comprised of an injection molding machine (not shown) that injects a melt flow of a selected fluid 18 through an inlet 2 into the distribution channel 40d of a heated manifold 40, the channel 40d routing the fluid 18 to the flow channels of multiple downstream nozzles 22, 22a, 22b. Nozzle 22a is a central or center nozzle with respect to the mold cavity 30, while nozzles 22b and 22 are utilized as downstream nozzles for purposes of sequential injection.

As shown in Figures 1, 1A the injection cycle is a cascade process where injection is effected in a sequence from the center nozzle 22a first and at a later predetermined time from the lateral nozzles 22, 22b. As shown in Fig. 1A the injection cycle is started by first opening the pin 1040 of the center nozzle 22a and allowing the fluid material 18 (typically polymer or plastic material) to flow up to a position 100a in the cavity just before the distally disposed entrance into the cavity 34, 36 of the gates of the lateral nozzles 24, 20 as shown in Fig. 1A. After an injection cycle is begun, the gate of the center injection nozzle 22 and pin 1040 is typically left open only for so long as to allow the fluid material 100b to travel to a position 100p just past the positions 34, 36. Once the fluid material has travelled just past 100p of the lateral gate positions 34, 36, the center gate of the center nozzle 22a is typically closed by pin 1040 as shown in Figs. 1B, 1C, 1D and 1E. The lateral gates 34, 36 are then opened by upstream withdrawal of lateral nozzle pins 1041, 1042 as shown in Figs. 1B-1E. As described below, the rate of upstream withdrawal or travel velocity of lateral pins 1041, 1042 is controlled as described below.

In alternative embodiments, the center gate 32 and associated actuator 940 and valve pin 1040 can remain open at, during and subsequent to the times that the lateral gates 34, 36 are opened such that fluid material flows into cavity 30 through both the center gate 32 and one or both of the lateral gates 34, 36 simultaneously.

When the lateral gates 34, 36 are opened and fluid material is allowed to first enter the mold cavity into the stream that has been injected from center nozzle 22a past gates 34, 36, the two streams mix with each other. If the velocity of the fluid material injected through the lateral nozzles 34, 36 is too high, such as often occurs when the flow velocity of injection fluid material through gates 34, 36 is at maximum, a visible line or defect in the mixing of the two streams will appear in the final cooled molded product at the areas where gates 34, 36 inject into the mold cavity. By injecting lateral gate flow at a reduced flow rate for a relatively short period of time at the beginning when the gate 34, 36 is first opened and following the time when the flow front first enters the flow stream from the center nozzle 22a the appearance of a visible line or defect in the final molded product can be reduced or eliminated.

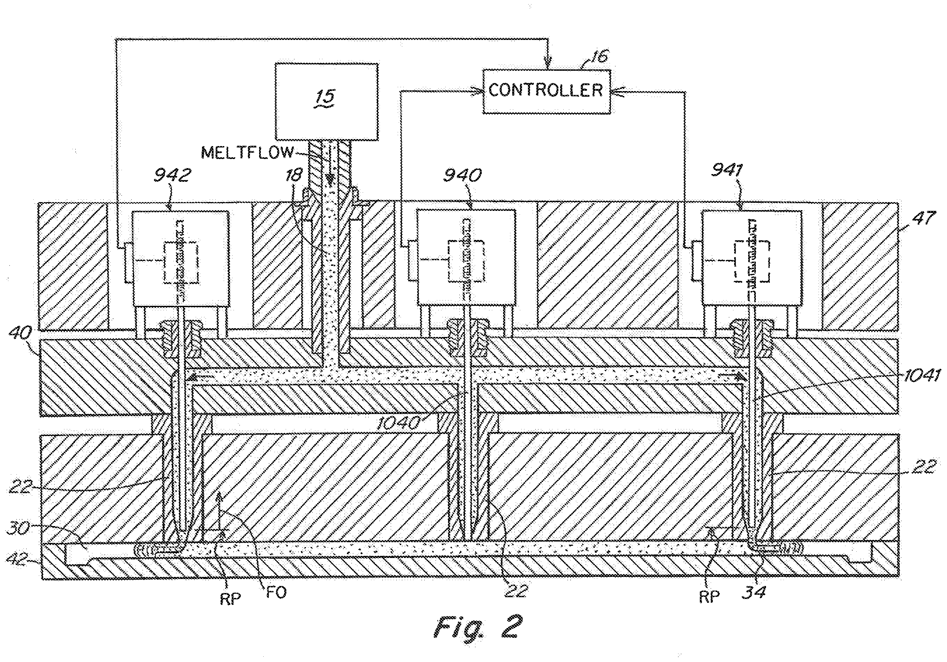

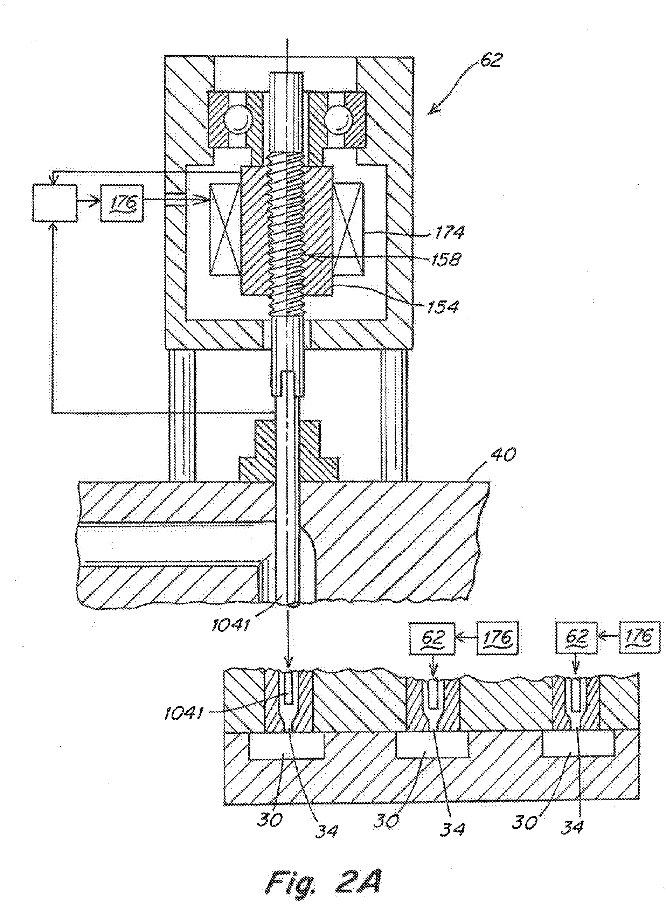

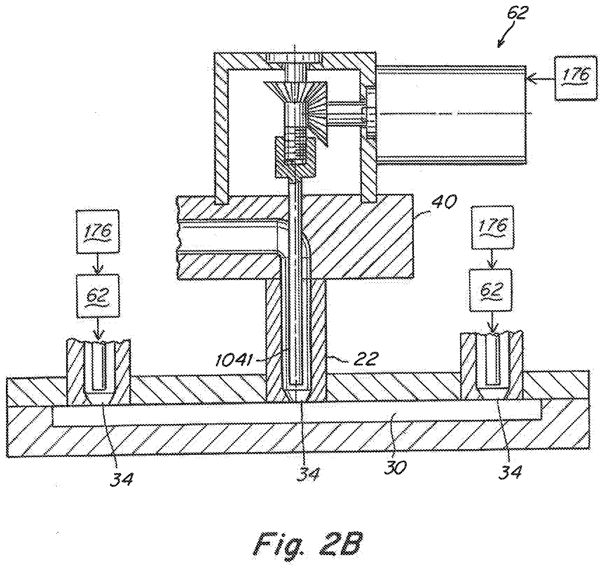

The rate or velocity of upstream withdrawal of pins 1041, 1042 starting from the closed position is controlled via controller 16, Figs. 1, 2 which controls the rate and direction of flow of hydraulic fluid from the drive system 700 to the actuators 940, 941, 942. In embodiments where the actuators 940, 941, 942 are electric motors or electrical power operated actuators, Fig. 2, the controller 16 similarly controls the electric motors.

A "controller," as used herein, refers to electrical and electronic control apparati that comprise a single box or multiple boxes (typically interconnected and communicating with each other) that contain(s) all of the separate electronic processing, memory and electrical signal generating components that are necessary or desirable for carrying out and constructing the methods, functions and apparatuses described herein. Such electronic and electrical components include programs, microprocessors, computers, PID controllers, voltage regulators, current regulators, circuit boards, motors, batteries and instructions for controlling any variable element discussed herein such as length of time, degree of electrical signal output and the like. For example a component of a controller, as that term is used herein, includes programs, controllers and the like that perform functions such as monitoring, alerting and initiating an injection molding cycle including a control device that is used as a standalone device for performing conventional functions such as signaling and instructing an individual injection valve or a series of interdependent valves to start an injection, namely move an actuator and associated valve pin from a gate closed to a gate open position. In addition, although fluid driven actuators are employed in typical or preferred embodiments of the invention, actuators powered by an electric or electronic motor or drive source can alternatively be used as the actuator component.

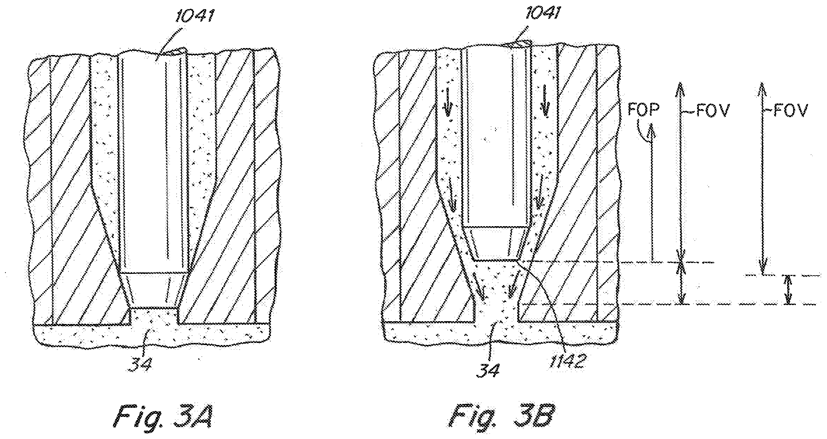

The user can program controller 16 via data inputs on a user interface to instruct the actuators 940, 941, 942 to drive pins 1041, 1042 at an upstream velocity of travel that is reduced relative to a maximum velocity over some portion of the upstream length of travel of the valve pin during the course of an injection cycle. The reduced velocity can occur beginning at the start of the injection cycle when the valve pin closes the gate 34, 36 or at beginning at some other upstream position of the valve pin. As described below, such reduced pin withdrawal rate or velocity is executed until a position sensor such as 951, 952 detects that an actuator 941, 952 or an associated valve pin (or another component), has reached a certain position such as the end point COP, COP2, Figs. 3B, 4B of a restricted flow path RP, RP2. A typical amount of time over which the pins are withdrawn at a reduced velocity is between about 0.01 and .20 seconds, the entire injection cycle time typically being between about 0.3 seconds and about 10 seconds.

Fig. 1 shows position sensors 950, 951, 952 for sensing the position of the actuator cylinders 940, 941, 942 and their associated valve pins (such as 1040, 1041, 1042) and feed such position information to controller 16 for monitoring purposes. Other position sensors for use in connection with electric actuators can be employed such as an enoder or light sensor position detector.

As shown, fluid material 18 is injected from an injection machine into a manifold runner 40d and further downstream into the bores of the center 22a and lateral nozzles 22, 22b and ultimately downstream through the gates 32, 34, 36.

The presence of the diameter or the mass PMD of the pins 1041, 1042 disposed within the volume or diameter NVD of at least the downstream end DE of the flow channel 22c of the nozzles 22, 22a, 22b inherently reduces the rate of flow of injection fluid through the channel 22c to and through the gates 32, 34, 36. The precise degree to which the rate of flow of injection fluid 18 through the gates 32, 34, 36 is either increased or decreased can be controllably varied by controllably varying the precise axial position AP of the pins 1040, 1041, 1042 within the volume or diameter NVD of the nozzle channels 22c.

When the pins 1041, 1042 are withdrawn upstream to a position where the tip end of the pins 1041 are in a fully upstream open position, such as the end of stroke position EOS, Fig. 1D, the rate of flow of fluid material through the gates 34, 36 is at a maximum. Such a maximum rate of flow will typically occur over a travel path length FO and is determined by the degree or size of the radial diameter D1, D2, Fig. 1E of the nozzle channel 22c at any given axial position along the axial length AL of the nozzle channel 22c relative to the diameter or mass PMD, Fig. 1A, of the valve pin. Thus, the degree or size of the radial diameter D1, D2 of the nozzle channel 22c along the axial length AL of the channel 22c can be preselected together with controllable positioning of the axial position AP of the valve pin to controllably vary the rate of flow of injection fluid during the course of a single injection cycle. As shown in Figs. 1A-1E, the configuration of channel 22c is conical at its distal end and cylindrical upstream of the conical portion. Other channel configurations can be employed such as a downstream distal end conically shaped portion, a first cylindrical portion having a first diameter immediately upstream of the conical portion and a second cylindrical portion having a second diameter immediately upstream of the first cylindrical portion. Other channel 22c configurations can be employed.

In the specific embodiments shown, when the pins 1041, 1042 are initially withdrawn beginning from the closed gate position, Fig. 1A, to intermediate upstream positions, Figs. 1B, 1C, a gap 1154, 1156 is formed that restricts the velocity of fluid flow between the outer circumferential surface 1155 of the distal tip end of the pins 22a, 22b and the inner surfaces 1158 of the gate areas of the nozzles 24, 20. In the embodiments shown, the restricted flow gap 1154, 1156 remains small enough to restrict and reduce the rate of flow of fluid material 18 through gates 34, 36 to a rate that is less than a maximum flow velocity over a travel distance RP of the tip end of the pins 1041, 1042 going from closed to upstream as shown in Fig. 1E. Depending on the precise selection of the diameter or mass PMD of the valve pin 1042 relative to the diameter D1, D2 of the channel 22c ,the circumferential surface 1155 of the valve pin may restrict flow of injection fluid 18 to less than a maximum over a different length of travel RP2 that is longer than the length of travel path RP.

The pins 1041 can be controllably withdrawn at one or more reduced travel velocities (less than a maximum) for one or more periods of time over any selected portion of the stroke length or over the entire length of the stroke length. Typically the valve pin is controllably withdrawn at a reduced velocity over some portion of or the entire length of the path RP, RP2 over which flow of mold material 1153 is restricted.

Typically the pins are withdrawn at a reduced velocity over more than about 50% of RP or RP2 and most preferably over more than about 75% of the length RP, RP2.

The trace or visible lines that appear in the body of a part that is ultimately formed within the cavity of the mold on cooling above can be reduced or eliminated by reducing or controlling the velocity of the pin 1041, 1042 opening or upstream withdrawal from the gate closed position to a selected intermediate upstream gate open position that is preferably 75% or more of the length of RP, RP2.

RP can be about 1-20 mm in length and more typically about 2-10 mm and even more typically 2-5 mm in length. As shown in Fig. 2 in such an embodiment, a control system or controller 16 is preprogrammed to control the sequence and the rates of valve pin 1040, 1041, 1042 opening and closing. The controller 16 controls the rate of travel or velocity of upstream travel, of a valve pin 1041, 1042 from its gate closed position for at least the predetermined amount of time that is selected to withdraw the pin at the selected reduced velocity rate.

In one embodiment, the valve pin and the gate can be configured or adapted to cooperate with each other to restrict and vary the rate of flow of fluid material 1153, Figs. 3A-3B, 4A-4B over the course of travel of the tip end of the valve pin through the restricted velocity path RP. As shown in Figs. 3A, 3B the radial tip end surface 1155 of the end 1142 of pin 1041, 1042 can be conical or tapered and the surface of the gate 1254 with which pin surface 1155 is intended to mate to close the gate 34 is complementary in conical or taper configuration. Alternatively as shown in Figs. 4A, 4B, the radial surface 1155 of the tip end 1142 of the pin 1041, 1042 can be cylindrical in configuration and the gate can have a complementary cylindrical surface 1254 with which the tip end surface 1155 mates to close the gate 34 when the pin 1041 is in the downstream gate closed position. In any embodiment, the outside radial surface 1155 of the tip end 1142 of the pin 1041 creates restricted a restricted flow channel 1154 over the length of travel of the tip end 1142 through and along restricted flow path RP that restricts or reduces the volume or rate of flow of fluid material 1153 relative to the rate of flow when the pin 1041, 1042 is at a full gate open position, namely when the tip end 1142 of the pin 1041 has travelled to or beyond the length of the restricted flow path RP.

In one embodiment, as the tip end 1142 of the pin 1041 continues to travel upstream from the gate closed GC position (as shown for example in Figs. 3A, 4A) through the length of the RP path (namely the path travelled for the predetermined amount of time), the rate of material fluid flow 1153 through restriction gap 1154 through the gate 34 into the cavity 30 continues to increase from 0 at gate closed GC position to a maximum flow rate when the tip end 1142 of the pin reaches a position FOP (full open position), where the pin is no longer restricting flow of injection mold material through the gate.

In alternative embodiments, when the predetermined time for driving the pin at reduced velocity has expired and the tip 1142 has reached the end of restricted flow path RP2, the tip 1142 may not necessarily be in a position where the fluid flow 1153 is not still being restricted. In such alternative embodiments, the fluid flow 1153 can still be restricted to less than maximum flow when the pin has reached the changeover position COP2 where the pin 1041 is driven at a higher, typically maximum, upstream velocity FOV. In the alternative examples shown in the Figs. 3B, 4B examples, when the pin has travelled the predetermined path length at reduced velocity and the tip end 1142 has reached the changeover point COP, the tip end 1142 of the pin 1041 (and its radial surface 1155) no longer restricts the rate of flow of fluid material 1153 through the gap 1154 because the gap 1154 has increased to a size that no longer restricts fluid flow 1153 below the maximum flow rate of material 1153. Thus in one of the examples shown in Fig. 3B the maximum fluid flow rate for injection material 1153 is reached at the upstream position COP of the tip end 1142. In another example shown in Fig. 3B 4B, the pin 1041 can be driven at a reduced velocity over a shorter path RP2 that is less than the entire length of the restricted mold material flow path RP and switched over at the end COP2 of the shorter restricted path RP2 to a higher or maximum velocity FOV.

In another alternative embodiment, shown in Fig. 4B, the pin 1041 can be driven and instructed to be driven at reduced or less than maximum velocity over a longer path length RP3 having an upstream portion UR where the flow of injection fluid mold material is not restricted but flows at a maximum rate through the gate 34 for the given injection mold system. In this Fig. 4B example the velocity or drive rate of the pin 1041 is not changed over until the tip end of the pin 1041 or actuator 941 has reached the changeover position COP3. As in other embodiments, a position sensor senses either that the valve pin 1041 or an associated component has travelled the path length RP3 or reached the end COP3 of the selected path length and the controller receives and processes such information and instructs the drive system to drive the pin 1041 at a higher, typically maximum velocity upstream. In another alternative embodiment, the pin 1041 can be driven at reduced or less than maximum velocity throughout the entirety of the travel path of the pin during an injection cycle from the gate closed position GC up to the end-of-stroke EOS position, the controller 16 being programmed to instruct the drive system for the actuator to be driven at one or more reduced velocities for the time or path length of an entire closed GC to fully open EOS cycle.

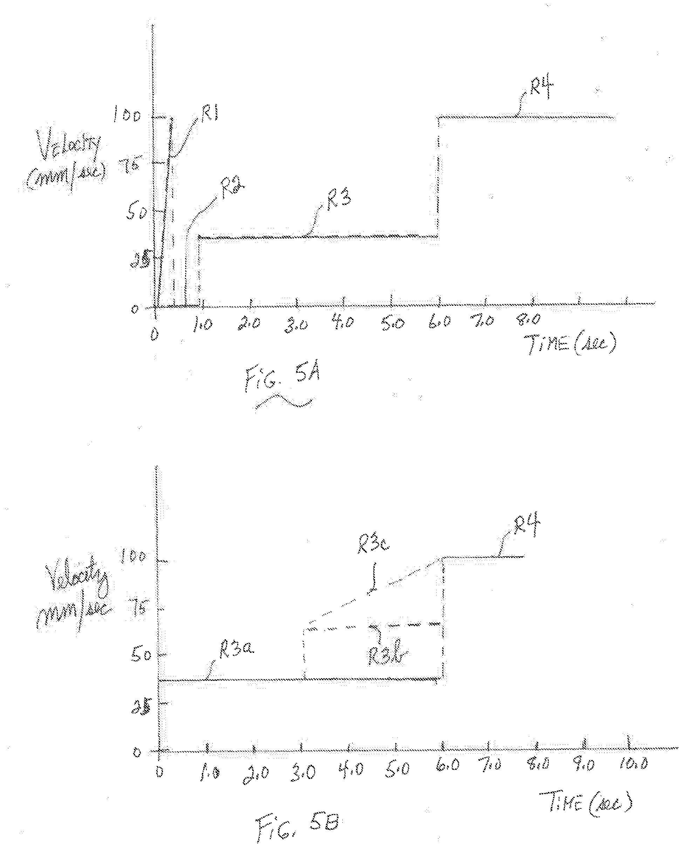

Figs. 5A-5D show various alternative embodiments of pin velocity protocols on the upstream half of an injection cycle. As shown in Fig. 5A, the valve pin is initially driven beginning from the closed position at a very high velocity R1 for a very short period of time such as about .2 seconds from 0 mm/sec to a maximum upstream velocity of 100 mm/sec during which time the pin is driven to some intermediate upstream position at which the flow of injection fluid 18 is restricted to less than a maximum as described above. Next, the velocity of the pin R2 is reduced to zero mm/sec such that the valve pin remains stationary for a period of about 0.8 seconds in the reduced flow position, typically the same as or similar to a pack or hold pack position. Next, the valve pin is driven at a reduced upstream velocity R3 of about 30 mm/sec (less than a maximum velocity) for about 5.0 seconds and next the valve pin is driven upstream at the maximum velocity of 100 mm/sec to a fully upstream open position.

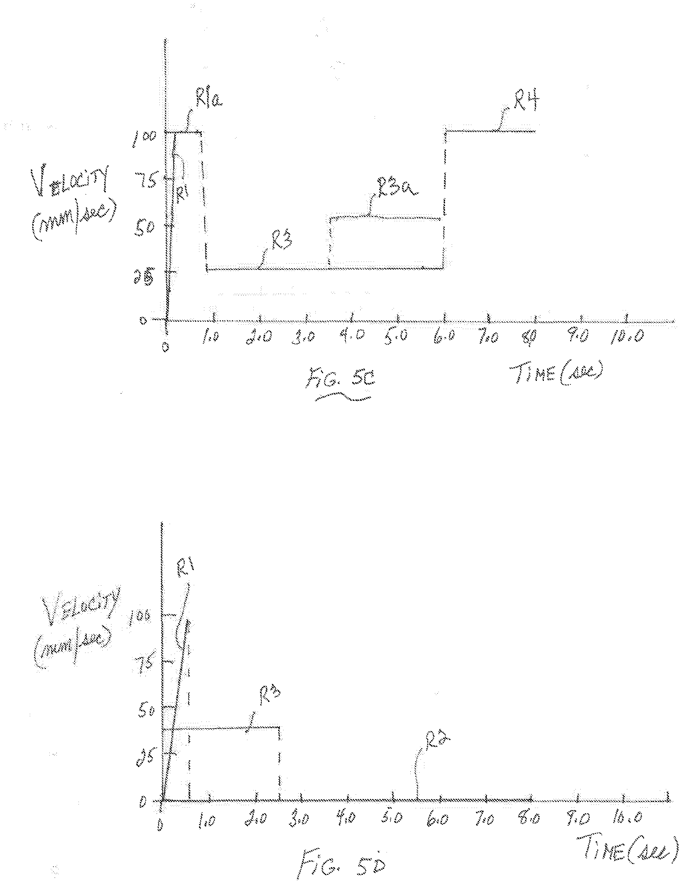

Fig. 5B shows an alternative velocity control profile where the valve pin is driven beginning from the gate closed or zero position at a reduced upstream velocity R3a for about 3.0 seconds, then driven at another reduced upstream velocity R3b or a serially increasing reduced velocity R3c for about 3.0 seconds and then driven at the maximum 100 mm/second velocity until the pin reaches the fully open upstream position. Fig. 5C illustrates another velocity profile where the pin is driven initially beginning from the gate closed position at a very high rate R1 up to the maximum for a very short time (about 0.3 seconds), then driven for about 0.7 seconds at the maximum velocity R1a (about 100 mm/sec) upstream to a position typically where the flow is restricted by the position of the valve pin, then driven at a reduced, less than maximum, velocity R3 for about 5.0 seconds (or alternatively at another higher but still reduced, less than maximum, velocity R3a beginning at about 3.5 seconds) and then beginning at about 6.0 seconds driven at the maximum velocity R4 (about 100 mm/sec).

Fig. 5D shows an embodiment where the valve pin is either driven beginning at the gate closed position at a very high velocity R1 up to maximum for a very short period of time (about 0.3 seconds) such that the valve pin reaches a flow restricted position as described above and then subsequently is stopped at zero velocity R2 in a restricted flow position as described above for the remainder or entirety of at least the upstream portion of the injection cycle. In such an embodiment, the pin is typically held in the selected intermediate flow restrictive position for the entirety of the injection cycle subsequent to the initial 0.3 high drive portion of the cycle such that the pin is driven in less than about 0.3 seconds from intermediate upstream flow restrictive position at the end of the cycle (about 8.0 seconds) downstream to the gate closed position. An alternative protocol shown in Figure 5H is where the pin is driven beginning at the gate closed position at a reduced rate of upstream velocity and travel (such as about 30 mm/sec) for a short time (about 2.5 seconds) to a fluid flow restrictive position and then stopped at the fluid flow restricted position at 0 mm/second, R2, for the remainder of the injection cycle (about 5.5 second) at which time the pin is driven at very high velocity downstream to the closed position in less than about 0.3 seconds. In such embodiments the pin is essentially held in an intermediate reduced fluid flow rate position for the essential entirety of the injection cycle.

Typically the user selects one or more reduced velocities that are less than about 90% of the maximum velocity, more typically less than about 75% of the maximum velocity and even more typically less than about 50% of the maximum velocity at which the pins 1041, 1042 are drivable by the actuator system. The actual maximum velocity at which the actuators 941, 942 and their associated pins 1041, 1042 are driven is predetermined by selection of the size and configuration of the actuators 941, 942, the size and configuration of the valve pins and the degree of pressurization. The maximum drive rate of the actuator system is predetermined by the manufacturer and the user of the system and is typically selected according to the application, size and nature of the mold and the injection molded part to be fabricated.

Thus as described with reference to Figs. 5A-5D, the controller 16 of the system can be programmed to include instructions that instruct the valve pins to withdraw the valve pin at one or times during the course of the upstream portion of the injection cycle at a velocity that is reduced relative to a maximum velocity at which the pin can be withdrawn by the actuators. Although not depicted in the Figures, the same is true of the downstream portion of an injection. The controller 16 can include instructions that instruct the valve pins to drive the valve pins at one or more times during the course of the downstream portion of the injection cycle at a velocity that is reduced relative to a maximum velocity.

As described with reference to Figs. 5A, 5D, the controller 16 can also include instructions that instruct the valve pins to remain stationary at zero velocity in a single predetermined axial position for a selected period of time during the course of either the upstream or downstream portions of an injection cycle.

Figs. 1AA, 1CC, 1DD, 1EE, 1FF shows an example not according to the invention in which the screw 16 of a barrel 19a of an injection machine 15 injects a flow of injection fluid 18 in a downstream direction 18d into and through an inlet 19b which in turn routes the injected fluid 18 into and through a distribution channel 40dfc of a heated manifold 40 which in turn routes the injected fluid 18 downstream into and through the flow channel 42a of a nozzle 22. In the Fig. 1AA system the downstream nozzle channel 42a includes a spiral, helical or rifled groove 700, thread or protrusion 700 that is bored or formed or etched into or onto the interior surface 22s of the body of the nozzle 22 so as to form a spiral or helically or rifle shaped groove or thread extending the full length L of the nozzle flow channel or passage 42a. The length of the groove can be selected to be of any selected length that is capable of creating a spiral turbulence or spiral vortex of flow of injection fluid 18 through the nozzle channel 42a sufficient to create a turbulence or disturbance in the flow of the injection fluid 18 such that the contents of the fluid 18 that ultimately flows through the gate 30g of the cavity or the distal end exit aperture 22e of the nozzle channel 42a and ultimately downstream into the cavity 30 of the mold 42 is thoroughly mixed. In the Fig. 1AA example, only the nozzle flow passage or channel 42a includes a spiral or helical groove or thread.

Fig. 1BB shows an example not according to the invention in which the flow channels 19bfc, 40dfc disposed within the upstream disposed inlet 19b and upstream manifold 40 both respectively are provided with spiral or helical grooves or threads 701, 702 that are bored or formed or etched into or onto the interior flow channel surfaces 19bs, 40dfcs respectively of the flow channels 19bfc, 40dfc. As with the spiral groove or thread 700 provided in the nozzle channel 42a, the spiral or helical grooves 701, 702 are provided with a selected length along the longitudinal flow axes A2, A3 of the channels 19bfc, 40dfc that is sufficient to create a turbulence or disturbance in the flow of the injection fluid 18 such that the contents of the fluid 18 that ultimately flows through the gate 30g of the cavity or the distal end exit aperture 22e of the nozzle channel 42a and ultimately downstream into the cavity 30 of the mold 42 is thoroughly mixed. In the Fig. 1BB example, all of the nozzle flow passage or channel 42a and the manifold passage 40dfc and the inlet passage 19bfc include a spiral or helical groove or thread.

In alternative illustrative examples, any one or more of the passages 19bfc, 40dfc and 42a alone or in combination can be provided with a spiral or helical or rifled groove or thread as shown in Figs. 1CC, 1DD, 1EE, 1FF.

Although the spiral handedness of the grooved channels shown in Figs. 1AA-1FF is right handed, a left handed configuration can also be employed. And, individual ones of the various passages 19bfc, 40dfc, 42a can have a different handedness.

The configuration of the grooves or threads are selected and adapted to guide the injection fluid 18 flowing downstream 18d through the one or more channels 19bfc, 40dfc and 42a in a direction that rotates either clockwise or counterclockwise R1, R2, R3 around the longitudinal axis A1, A2, A3 of the respective channel.

In a typical illustrative example, the system 5 includes a valve comprised of an actuator 940 interconnected to a valve pin 1040, the actuator being controllably driven by a controller 16 in a variety of pin movement protocols such as described herein with reference to Figs. 5A-5D. As shown in Fig. 1, 1AA the system 5 may include fluid driven actuators 940, 941, 942 interconnected to a valve system VS. Alternatively, as shown for example in Fig. 2, the system 5 may utilize electric motors 940, 941, 942 that are likewise controllably driven by a controller 16.

The valve pins that are used in conjunction with the actuators employed with the Figs. 1, 1AA-1FF, 2 systems can themselves have a fluid flow disruptive circumferential contour or configuration such as described with reference to the pins shown in Figs. 6A-13C.

In an embodiment according to the invention as shown in Figs. 1HH-1WW, a system 5, 10 includes a rod, wire, cylinder or spring 800 disposed within and through any one or more of the upstream channels 19bfc, 40dfc or the downstream nozzle channel 42a. As shown in Figs. 1HH-1LL, a single unitary or continuous spiral rod, wire, cylinder or spring 800 is disposed throughout all of the channels 19bfc, 40dfc and the downstream nozzle channel 42a.

The rod, wire, cylinder or spring 800 is typically adapted to be resiliently compressible and expandable in the nature of a spring. Such a compressible and expandable spring 800 can compress in axial length AL, Fig. 1II, when injection fluid is injected downstream under pressure IP, Figs. 1HH, 1KK, from the injection molding machine 15 through the channels 19bfc, 40dfc or the downstream nozzle channel 42a. Similarly, such a spring 800 can expand in axial length AL when the pressure of injection fluid flowing or disposed within or through the channels 19bfc, 40dfc or the downstream nozzle channel 42a reduces in pressure RP, Fig. 1KK, for any reason such as during the course of an injection cycle or at the end of an injection cycle.

As shown in Fig. 1MM, in an embodiment according to the invention an actuator and a valve pin are included and the spiral wire, rod, cylinder or spring 800 is arranged or disposed within the nozzle channel 42a such that the valve pin 1040 is disposed within or inside the inner diameter of the wire, rod, cylinder or spring 800 along the portion of the axial length AL, Fig. 1LL, of the spring 800 that extends along and throughout the axial length of the nozzle channel 42a. In the Figs. 1MM and 1OO embodiments, the inside diameter ID of the spiral wire, rod, cylinder or spring 800 is selected to be the same or about the same size or length as the outside diameter of the valve pin 1040 such that the inside diameter surface 800is of the spiral wire, rod, cylinder or spring 800 contacts or engages the outside diameter surface 1040s of the pin 1040 (or the outside diameter surface of a pin 107, 127, 147, 167, 187, 207, 227, 247 as described herein). In these same embodiments, the outside diameter OD of the spiral wire, rod, cylinder or spring 800 is selected such that the outside diameter surface of the spiral wire, rod, cylinder or spring 800 is the same or about the same as the diameter of the nozzle channel or passage 42a and preferably such that the outside diameter surface 800os of the spiral wire, rod, cylinder or spring 800 contacts or engages the inside diameter surface 42as of the nozzle channel 42a or the inside surface 40dfcis of the manifold channel 40dfc.

In other embodiments such as shown in Fig. 1UU the outside circumferential diameter of the spring may be less than the inside circumferential diameter of the channel 42a along one or more portions of the axial length of the channel 42a or spring. Similarly in other embodiments such as shown in Figs. 1VV, 1WW, the inside diameter of the spring may be greater than the outside circumferential diameter of the valve pin along one or more portions of the axial length of the valve pin or spring.

Similarly, as shown in Figs. 1HH-1NN, where the spiral wire, rod, cylinder or spring 800 extends through one or more of the upstream channels 19bfc, 40dfc, the outside diameter OD of the spiral wire, rod, cylinder or spring 800 can be selected such that the outside circumferential surface 800os of the spiral wire, rod, cylinder or spring 800 engages or contacts the inside surface 19bs, 40dfcs of one or more of the upstream channels 19bfc, 40dfc.

As shown in Fig. 1MM-1TT the valve pin 1040 can include a spiral groove 1040sg that is formed within the outside surface 1040s of the pin 1040. In such an embodiment both the groove 1040sg and the spiral wire, rod, cylinder or spring 800 or the spiral groove 700, 701, 702 formed within the flow channel(s) can disrupt the flow of injection fluid that flows through the one or more channels.

In all of the embodiments shown in Figs. 6A-13C, the downstream flow channel 42a has an axial A channel length L, DCL extending from an upstream end 42aue to a downstream end 42due. The channel 200 has a curved or arcuate portion 200a that interconnects the manifold distribution channel 40dfc to the arcuate portion 40mc of the channel 42a that terminates in at the gate 30g to the mold cavity 30. The channel 42a has an axially straight section that extends a downstream portion DCL of the overall channel length LL. The recesses, relieved portions, bores or discontinuities that are provided in the pins or rods 107, 127, 147, 167, 187, 207, 227, 247 are configured and arranged along the axial length L of a pin or rod such that the flow of injection fluid over or past the one or more discontinuous or relieved portions disposed in the straight section SS is modified to flow at substantially different rates or velocities or in substantially different flow patterns relative to rate or velocity or pattern of flow of injection fluid over or past the smooth continuous cylindrical outer suface (OS).

As shown in Figs. 1MM-1NN a left handed spiral or helical spring 800I having a circular cross section is disposed throughout the axial length AL of the bores or fluid flow channels of the inlet 19b that mate with and receive injection fluid from the injection molding machine barrel 19a, further downstream through a distribution flow channel 40dfc within the heated manifold 40, further downstream through a curved flow channel portion 40mc, 200a that is shown in an embodiment utilitzing a manifold plug 40p that is disposed or mounted within the manifold body 40 and further downstream into and through the flow channel 42a of a downstream nozzle 20, the spring 800I extending into the flow bore or channel 42a of a distal nozzle insert 42i that terminates in the gate 30g to the mold cavity 30. As shown the downstream nozzle channel 42a has a downstream channel length DCL through which a valve pin 1040 is disposed, the valve pin 1040 extending through the central axial aperture AXA of the portion of the spring 800I that extends through the downstream nozzle channel 42a.

In the embodiment as shown in Figs. 1OO-1QQ, the nozzle insert 42i has a distal end configuration with a diameter 30gd that is selected to be of a size or configuration that functions to hold or stop movement of the distal end 800de of the spiral spring 800I from extending past the gate 30g, the distal end 800de of the spring 8001 having an outside diameter 800deod that is greater than the diameter 30gd of the gate aperture formed by the channel insert 42i such that the distal end 800de acts as an interference or friction stop.

The handedness of the spring 800 can be right or left handed 800I, 800r. A valve pin is typically also employed in conjunction with a spring having a spiral groove for purposes of increasing the degree of disruption in flow of injection fluid or for purposes of assisting in routing of the flow of injunction fluid in a downstream direction toward the gate. A valve pin having a spiral groove 1040sgl, 1040sgr of either right or left handedness can be used in conjunction with a spiral spring 800I, 800r of either left or right handedness. Preferably a valve pin 1040 having a spiral groove handedness that is opposite to the handedness of the spiral spring is used for purposes of achieving higher disruption in the flow of injection fluid. Most preferably where a valve pin having a spiral groove 1040sgl, 1040sgr is employed, the valve pin is adapted to be rotatably drivable to further maximize disruption of injection fluid.

Figs. IPP, 1QQ show a left handed spiral spring 800I with a valve pin having a right handed spiral groove 1040sgr bored within the circumferential surface 1040cs of the pin 1040 extending axially through the center axial aperture AXA of the left handed spiral spring 800I. As shown, the left handed spring 800I has a rectangular cross section and a flat surface 800fs. The spring 800I extends from the upstream end 42aue of a nozzle channel 42a downstream through the nozzle channel 42a terminating at the upstream end 42iue, Fig. 1RR, of the downstream nozzle insert 42i and the downstream end 42ade of the nozzle channel 42a.

Fig. 1PP shows the upstream end of the Fig. 1OO spring 800I and the downstream end 40de of the manifold flow channel that is configured such that a stop or interference portion 40r of the manifold block or body 40 is formed to mechanically interfere with or act as a stop against which the upstream end surface of the spring 800ues engages to prevent the spring 800I from extending past the stop or interference portion 40r of the manifold, the upstream end outside diameter 800ueod of the spring 800 being greater than the annular space 42aas disposed between the outside surface 1040cs of the valve pin and the interference portion 40r of the manifold.

Fig. 1QQ is an enlarged sectional view of the downstream end of the Fig. 1OO spring and the channel insert 42i showing a stop or interference portion of the channel insert 42ir configured to interfere with or act as a stop against which the downstream end surface 800de of the spring 800I engages to prevent the spring from extending past the stop or interference portion 42ir of the channel insert. As shown the outside diameter 800deod of the downstream end 800de of the spring is greater than the diameter of the annular space 42aas between the outside surface of the valve pin 1040cs and the inside surface of the stop 42ir.

Fig. 1RR is a view similar to Fig. 1OO showing a left handed spiral spring 800I with a valve pin 1040 disposed through the central aperture AXA of the spring 800I, the pin having a left handed spiral groove 800sgl bored within its circumferential surface 1040cs. The spring 800I extends the full length DCL of the downstream channel 42a. The downstream channel 42a includes a curved channel portion 40mc that is disposed within the manifold 40 within a curved bore that is disposed within a manifold plug 40p, the curved bore 40mc having a curved inner surface 40mcs.

Fig. 1SS shows an enlarged sectional view of the upstream end 42aue of the downstream flow channel 42a of the Fig. 1SS assembly. As shown the upstream end 800ue of the spiral spring 800I is configured to engage the inside surface 40mcis of the curved manifold channel 42mc. The manifold channel bore 42mc is adapted and configured to stop, choke or prevent the upstream end 800ue of the spring from moving upstream past a choke or stop point in the manifold channel or bore 40mc that has a diameter 40mcd formed within an annular space 42aas between the outside surface 1040cs of the pin and the inside surface 40mcis of the curved channel 40mc that is smaller than the outside diameter 800ueod of the upstream end 800ue of the spring 800I. The curved manifold channel or bore 40mc is disposed in a plug 40p that is disposed within a complementary plug receiving bore in the manifold body 40.

Fig. shows the bore or channel of the channel insert 40p configured to choke or stop the upstream end 800ue of the spring 800I from moving upstream past the choke or stop point formed between the inside wall surface of the channel insert and the outer circumferential surface of the valve pin.

Fig. 1TT shows the downstream end 42ade of the downstream channel 42a being formed within a nozzle insert 42i. The end of the channel 42ade is configured and adapted to act as a stop, choke or interference that stops or prevents the downstream end 800de of the spring from travelling downstream past the position of the stop 42aded. As shown the stop functions to engage and stop the downsteam end 800de of the spring from travelling downstream past the stop point by virtue of the interior surface 42ais of the channel 42a or insert 42i being configured to form an annular space 42aas between the outer surface 1040cs of the pin 1040 having a diameter 42aed that is less than the outside diameter 800deod of the distal end 800de of the spring 800I, the downstream end 800de of the spring 800I thus engaging the inside surface 42ais at the choke point 42aded.

Fig. 1UU shows a left handed spiral spring 800I disposed throughout the channel length DCL of a downstream nozzle 22 where the spring is configured such that along an upstream end portion 42aup of the spring 800I the outside diameter ODs1 of the spiral spring is less or smaller than the outside diameter ODI1 of the spring that extends along an intermediate portion 42amp of the spring that is immediately downstream of the upstream end portion 42aup and further showing that the outside diameter ODs2 of the spring extending along a downstream end portion 42adp of the spring is less or smaller than the outside diameter ODI1 of the intermediate portion 42amp.

Fig. 1VV is a sectional view of an embodiment of a left handed spiral spring 800I disposed throughout the channel length DCL of a downstream nozzle 22 where the spring is configured such that along an upstream end portion 42aup of the spring the inside diameter IDI1 u of the spiral spring is greater than the inside diameter IDs1 of the spring that extends along an intermediate portion 42amp of the spring that is immediately downstream of the upstream end portion 42aup and further showing that the inside diameter IDI2d of the spring extending along a downstream end portion 42adp of the spring is greater than the inside diameter IDs1 of the intermediate portion 42amp.

Fig. 1WW is a sectional view of an embodiment of a left handed spiral spring 800I disposed throughout the channel length DCL of a downstream nozzle 22 where the spring is configured such that along an upstream end portion 42aup of the spring the inside diameter IDS1u of the spiral spring is less than the inside diameter IDI of the spring that extends along an intermediate portion 42amp of the spring that is immediately downstream of the upstream end portion and further showing that the inside diameter IDs2d of the spring extending along a downstream end portion 42adp of the spring is less than the inside diameter IDI of the intermediate portion 42amp.

As shown by the examples of Figures 1UU, 1VV, 1WW the inside and outside diameters of a spring 800r, 800I that is disposed within a downstream channel 42a can be varied or different along any selected one or more portions along the axial length DCL of the downstream channel.

Each of the pins or rods 107, 127, 147, 167, 187, 207, 227, 247 as shown in Figs. 6A-13C has an axial pin length L. Most preferably, a discontinuous or relieved portion (10a, 12a, 12b, 16a, 16b, 18a, 18b, 18c, 22a) of the outer circumferential surface of the rod or pin 107, 127, 147, 167, 187, 207, 227, 247 is disposed within a curved or arcuate portion 200a, Fig. II of the fluid flow channel 42a over the course of at least a portion of the reciprocal upstream downstream (UD) path of travel of the valve pin 107, 127, 147, 167, 187, 207, 227, 247.

Figs. 6A - 6C show one embodiment of a pin 107 configuration having a recess, relieved portion, bore or discontinuity (or discontinuous portion) 6 in the form of a substantially flat surface 10a being formed into the otherwise smooth continuous outer cylindrically shaped surface OS of the pin or rod 10. As shown the recess 11 extends a relatively short distance SD along the axial length L of the pin 10.

Figs. 6AA - 6CC show another embodiment of a pin 107 configuration having a recess, relieved portion, bore or discontinuity 11 in the form of a substantially concave or curvilinear surface or groove 10aa being formed into the otherwise smooth continuous outer cylindrically shaped surface OS of the pin or rod 107. As shown the recess 11 extends a relatively short distance SD along the axial length L of the pin 10.

Figs. 6AAA - 6CCC show another embodiment of a pin 10 configuration having a recess, relieved portion, bore or discontinuity 11 in the form of a substantially convex surface 10aaa being formed into the otherwise smooth continuous outer cylindrically shaped surface OS of the pin or rod 107. As shown the recess 11 extends a relatively short distance SD along the axial length L of the pin 10.

Figs. 7A - 7C show another embodiment of a pin 127 configuration having a relieved portion, discontinuous portion, discontinuity, recess or bore 13 in the form of a pair of flat surfaces 12a, 12b being formed into the otherwise smooth continuous outer cylindrically shaped surface OS of the pin or rod 12. As shown the recess 13 extends a relatively short distance SD along the axial length L of the pin 127.

Figs. 8A - 8C show another embodiment of a pin 147 configuration having a discontinuity 15 in the form of multiple dimples 14a being formed into the otherwise smooth continuous outer cylindrically shaped surface OS of the pin or rod 147. As shown the discontinuity 15 extends an extended relatively long distance ED, Fig. 8B, along the axial length L of the pin 147.

Figs. 9A - 9C show another embodiment of a pin 167 configuration having double recesses or bores or discontinuities 17 in the form of a pair of 180 degree opposing flat surfaces 16a, 16b being formed into the otherwise smooth continuous outer cylindrically shaped surface OS of the pin or rod 16. As shown the recesses 17 extend a relatively extended distance ED along the axial length L of the pin 167.

Figs. 10A - 10C show another embodiment of a pin 187 configuration having a series of sequentially disposed recesses or bores or discontinuities 19 in the form of flat surfaces 18a, 18b being formed on 180 degree radially opposing sides into the otherwise smooth continuous outer cylindrically shaped surface OS of the pin or rod 10. As shown the recesses 19 extend a relatively short distance SD in axially sequential locations along the axial length L of the pin 187.

Figs. 11A - 11C show another embodiment of a pin 207 configuration having multiple recesses or bores or discontinuities 21 formed sequentially along the axial length of the pin 20 in the form of radially reduced in diameter cylindrical necks or graduations 20a, 20b, 20c being formed into the otherwise smooth continuous outer cylindrically shaped surface OS of the pin or rod 207. As shown each of the successive recesses 21 extend a relatively short distance SD along the axial length L of the pin 207, the entire sequence extending an extended distance ED.

Figs. 12A- 12C show another embodiment of a pin 227 configuration having a relieved portion, discontinuous portion, discontinuity, recess or bore 23 in the form of a flat surface 22a being formed into the otherwise smooth continuous outer cylindrically shaped surface OS of the pin or rod 227. As shown the recess 11 extends an extended relatively long distance ED along the axial length L of the pin 227.

Figs. 13A- 13C show another embodiment of a pin 247 configuration having a spiral relieved portion, discontinuous portion, discontinuity, recess or bore 25 in the form of a spirally shaped curved or curvilinear surface 24a being formed into the otherwise smooth continuous outer cylindrically shaped surface OS of the pin or rod 10. As shown the recess 25 extends an extended relatively long distance ED along the axial length L of the pin 247.

Where the pin or rod 1040 has a uniform completely smooth uninterrupted cylindrical or pyramidal outer circumferential surface OS along its entire axial length throughout the axial length LL of the flow channel 42a, the flow of injection fluid 18 will, in the absence of another discontinuous structural element or configuration of the channel 42a itself, flow in an undisrupted pattern through the channel 42a toward and through the gate 30g with a minimal amount of disturbance, disruption or turbulence over the path of flow.

Where a valve pin such as shown in Figs 6A-13C is employed, a disruption or variation in the flow patterns and flow velocities of injection fluid 18 that flows through the downstream length DP of the flow channel 42a will occur. The discontinuities in the pins or rods shown in Figs. 6A-13C are configured and arranged along the axial length L of a pin or rod such that the flow of injection fluid through the straight section SS is modified to flow at substantially different rates or velocities or in substantially different flow patterns taken along a radial cross section RCS along essentially the entire length DP of the straight section SS.

The pins or rods of the Figs. 1AA, 1BB, 1CC, 6A-13C embodiments are typically non-rotatable or are interconnected to the piston of the actuator 55 such that the pins or rods are prevented from rotating R around their longitudinal axes A within the flow channel 42a. Even without rotation R of the pins or rods, the turbulence and variation in flow pattern and velocities as described above are achieved along the length DP of the straight section of the flow channel 42a.

In an alternative embodiment, as shown in Fig. 14 the valve pin or rod 107, 127, 147, 167, 187, 207, 227, 247, 1040 can be interconnected to both a linear actuator 557 and a rotatable drive actuator 507. The linear actuator 557 has a linear driver or piston 927 that is controllably drivable in an upstream-downstream reciprocal manner along an axis A7 that is in-line with the flow channel or bore 42a and is mounted in a stationary position relative to either a top clamp plate 47 or the manifold 40. In the embodiment shown in Fig. 14, the linear actuator 557 typically comprises a fluid driven device typically either hydraulic (such as oil) or pneumatic (such as air) driven where a piston 927 is housed within the sealed bore of a cylinder and driven by controllable pumping of the fluid into and out of upstream and downstream drive chambers within the cylinder that houses the piston. The piston is prevented from rotating in the cylinder by guide rod 967 and bore 987. The housing or support 104 of a second rotary actuator 507 is mounted to the linear driver or piston 927 via a connector 106 such that the rotary actuator 507 is movable in the axial direction A7 in unison with movement of the piston 927. The housing is mounted on sleeves 1107 and slides along guide rods 1127. The rotary actuator 507 includes a central controllably rotatable rotor 1027 that is controllably rotatable R around the axis A7 of the path of linear travel of the piston 927.

In such an alternative embodiment, the valve pin 1207 is connected to the rotor 1027 via a head 1227 such that the valve pin 1207 moves or translates in unison axially A7 with axial movement of the piston 927 and rotary actuator 507. The distal tip end 1247 of the valve pin 1207 is moved axially into and out of a closed gate position during the course of an injection cycle axial movement A7 of piston 972, actuator 507 and its interconnected valve pin 1207 which can have a configuration such as described above for pins 107, 127, 147, 167, 187, 207, 227, 247, 1040. The head 1227 of the valve pin 1207 is connected to the rotor 1027 in a manner such that the pin 1207 is secure against rotation relative to the rotor 1027 itself and at the same time fixedly connected to the rotor 1027 axially whereby the pin 1207 rotates R in unison with rotation R of the rotor 1027.

In such an embodiment, the pin 120 is adapted not to rotate relative to rotor 102 of Figs. 14, 15 and will only rotate together with rotation of the rotor 1027 itself. As shown, the head 1227 of the pin 1207 can be provided with a pair of cylindrical grooves that slide into a complementary receiving aperture that is formed within the body of the downstream end 937 of piston 927 or in the body of a connector portion 1087 of rotor 1027 of the Figs. 19 embodiment. The receiving aperture typically has complementary cylindrically shaped protrusions that when mated within the cylindrically shaped grooves of pin 1207 prevent pin 1207 from rotating relative to rotor 1027 or piston 927. The receiving aperture is typically formed by two bores connected by a slot with flat sides with protrusions formed on them. This allows an actuator to be easily disconnected from a valve pin by sliding the actuator sideways after removal of only four (4) connecting bolts.

## Claims

1. An injection molding apparatus (5) comprising an injection molding machine (15) that generates an injection fluid (18), one or more upstream channels (19bfc, 40dfc, 40mc) having a longitudinal flow axis (A2, A3) that receive the injection fluid (18) from the injection molding machine (15) at an upstream end and that route the injection fluid downstream toward a downstream end and one or more nozzle channels (42a), each nozzle channel (42a) having a longitudinal flow axis (A1) formed in an associated nozzle that receives the injection fluid from the one or more upstream channels (19bfc, 40dfc) at an upstream end and that routes the injection fluid downstream toward a downstream end,
wherein a spring, coil, wire, rod or cylinder (800) configured in the form or shape of a spiral or helix is disposed within and extends axially through one or more of the upstream channels (19bfc, 40dfc, 40mc) and the nozzle channel (42a), the spring, coil, wire, rod or cylinder having an axial length (AL, DCL) and a right handed (800r) or left handed (800I) spiral or helix;
**characterized in that**
the apparatus further comprises an actuator (940) interconnected to a valve pin (1040) comprised of a rod or shaft having a circumferential surface (1040cs, OS), the actuator being controllable to drive the valve pin upstream and downstream through the nozzle channel (42a); and
wherein the spiral spring, coil, wire, rod or cylinder has an axial aperture (AXA) through which the valve pin (1040) is disposed, and the valve pin has a circumferential surface (1040cs, OS) that is smooth or has a discontinuity (11, 13, 115, 17, 19, 21, 23, 25, 800sgr, 800sgl) formed within the outer circumferential surface (1040cs, OS) that interacts with injection fluid flowing past or along the outer circumferential surface (1040cs, OS) to cause the flowing injection fluid to flow in a turbulent, disrupted or mixing manner.

2. An apparatus according to claim 1 wherein the spiral or helix shaped spring, coil, wire, rod or cylinder is circular (800cs), oval, square, triangular, rectangular or other multiplanar or multi-linear sided (800fs) in cross section.

3. An apparatus according to any of the foregoing claims wherein the spiral or helix shaped spring, coil, wire, rod or cylinder has one or more selected pitches (P) extending over one or more selected portions of the axial length.

4. An apparatus according to any of the foregoing claims wherein the spiral or helix shaped spring, coil, wire, rod or cylinder has one or more portions extending along different portions of the axial length of the spring that have inside diameters (IDI1u, IDs1u, IDs1, IDI, IDI2d, IDs2d) that are greater than, lesser than or different from each other.

5. An apparatus according to any of the foregoing claims wherein the spiral or helix shaped spring, coil, wire, rod or cylinder has one or more portions extending along different portions of the axial length of the spring that have outside diameters (ODs1, ODI1, ODs2) that are greater than, lesser than or different from each other.

6. An apparatus according to any of the foregoing claims wherein the spiral or helix shaped spring, coil, wire, rod or cylinder (800) is resiliently compressible and expandable at least under force (IP, RP) exerted by the injection fluid injected into and through the one or more upstream channels and nozzle channel by the injection molding machine.

7. An apparatus according to any of the foregoing claims wherein the valve pin is controllably rotatable around an axis of the valve pin.

8. An apparatus according to any of the foregoing claims wherein the valve pin has an axial length and a maximum cross sectional diameter at at least a selected position along the axial length of the valve pin and wherein the spiral or helix shaped spring, coil, wire, rod or cylinder has an inside helix diameter (ID), an inside helix surface (800is), an outside helix diameter (OD) and an outside helix surface (800os), the inside helix diameter (ID) of the spring, coil, wire or cylinder being selected such that the inside helix surface (800is) contacts or engages the outer circumferential surface (1040s) of the valve pin (1040) at at least the selected position along the axial length of the valve pin that has the maximum cross sectional diameter (PD).

9. An apparatus according to any of the foregoing claims wherein the one or more upstream channels (19bfc, 40dfc) and the nozzle channel (42a) each have an inside channel surface (19bs, 40dfcs, 22s), the spiral or helix shaped spring, coil, wire, rod or cylinder having an inside helix diameter (ID), an inside helix surface (800is), an outside helix diameter (OD) and an outside helix surface (800os), the spring, coil, wire, rod or cylinder being adapted such that the outside helix surface (800os) engages or contacts the inside channel surface (19bs, 19bfcis, 40dfcis, 22s) of one or more of the upstream channels (19bfc, 40dfc) and the nozzle channel (42a).

10. An apparatus according to any of the foregoing claims wherein the one or more upstream channels and the nozzle channel each have an inside channel surface (42as, 40mcis, 40dfcis), the spiral or helix shaped spring, coil, wire, rod or cylinder having an inside helix diameter (ID), an inside helix surface (800is), an outside helix diameter (OD) and an outside helix surface (800os), the spring, coil, wire, rod or cylinder being adapted such that the outside helix surface (800os) engages or contacts the inside channel surface (42as, 40mcis, 40dfcis) of one or more of the upstream channels (40dfc, 19bfc) and the nozzle channel (42a).

11. An apparatus according any of the foregoing claims wherein the spiral or helix shaped spring, coil, wire, rod or cylinder has an upstream end (800ue), the nozzle channel (42a) or the manifold channel (40mc) having a stop (40r) or an inside surface (40mcs) adapted to engage and choke (40mcd) or stop (40r) the upstream end (800ue, 800ued))of the spring from travelling upstream.

12. An apparatus according any of the foregoing claims wherein the spiral or helix shaped spring, coil, wire, rod or cylinder has a downstream end (800de), the nozzle channel having a stop (42ir) or an inside surface (42ais) adapted to engage (42ir) and choke (42aded, 800deod) or stop (42ir) the downstream end (800de) of the spring from travelling downstream.

13. A method of injecting and disrupting flow of an injection fluid to a mold cavity comprising injecting the injection fluid to the mold cavity using an apparatus according to any of the foregoing claims.

## Patentansprüche

1. Spritzgießvorrichtung (5) mit einer Spritzgießmaschine (15), die ein Einspritzfluid (18) erzeugt, einem oder mehreren stromaufwärtsseitigen Kanälen (19bfc, 40dfc, 40mc) mit einer Längsströmungsachse (A2, A3), die das Einspritzfluid (18) von der Spritzgießmaschine (15) an einem stromaufwärtsseitigen Ende empfangen und das Einspritzfluid stromabwärts in Richtung zu einem stromabwärtsseitigen Ende weiterleiten, und einem oder mehreren Düsenkanälen (42a), wobei jeder Düsenkanal (42a) eine Längsströmungsachse (A1) aufweist, die in einer zugeordneten Düse ausgebildet ist, die das Einspritzfluid von dem einen oder den mehreren stromaufwärtsseitigen Kanälen (19bfc, 40dfc) an einem stromaufwärtsseitigen Ende empfängt und das Einspritzfluid stromabwärts in Richtung zu einem stromabwärtsseitigen Ende weiterleitet,
wobei eine Feder, eine Spule, ein Draht, ein Stab oder ein Zylinder (800), die in der Form oder Gestalt einer Spirale oder einer Schraubenlinie konfiguriert sind, innerhalb eines oder mehrerer der stromaufwärtsseitigen Kanäle (19bfc, 40dfc, 40mc) und des Düsenkanals (42a) angeordnet sind und sich axial durch diese hindurch erstrecken, wobei die Feder, die Spule, der Draht, der Stab oder der Zylinder eine axiale Länge (AL, DCL) und eine rechtsgängige (800r) oder linksgängige (800I) Spiral- oder Schraubenlinie aufweist;
**dadurch gekennzeichnet, dass**
die Vorrichtung ferner einen Aktuator (940) aufweist, der mit einem Ventilstift (1040) verbunden ist, der aus einer Stange oder Welle mit einer Umfangsfläche (1040cs, OS) besteht, wobei der Aktuator steuerbar ist, um den Ventilstift stromaufwärts und stromabwärts durch den Düsenkanal (42a) hindurch anzutreiben, und
wobei die/der spiralförmige Feder, Spule, Draht, Stab oder Zylinder eine axiale Öffnung (AXA) aufweist, durch die hindurch der Ventilstift (1040) angeordnet ist, und wobei der Ventilstift eine Umfangsfläche (1040cs, OS) aufweist, die glatt ist oder eine Diskontinuität (11, 13, 115, 17, 19, 21, 23, 25, 800sgr, 800sgl) aufweist, die innerhalb der Außenumfangsfläche (1040cs, OS) ausgebildet ist und mit dem an der Außenumfangsfläche (1040cs, OS) vorbeifließenden oder entlang der Außenumfangsfläche fließenden Einspritzfluid wechselwirkt, um zu bewirken, dass das fließende Einspritzfluid in einer turbulenten, gestörten oder mischenden Weise fließt.

2. Vorrichtung nach Anspruch 1, wobei die/der spiral- oder schraubenlinienförmige Feder, Spule, Draht, Stab oder Zylinder einen kreisförmigen (800cs), ovalen, quadratischen, dreieckigen, rechteckigen oder einen anderen multiplanaren oder aus mehreren geraden Seiten (800fs) bestehenden Querschnitt aufweist.

3. Vorrichtung nach einem der vorhergehenden Ansprüche, wobei die/der spiral- oder schraubenlinienförmige Feder, Spule, Draht, Stab oder Zylinder eine oder mehrere ausgewählte Steigungen (P) aufweist, die sich über einen oder mehrere ausgewählte Abschnitte der axialen Länge erstrecken.

4. Vorrichtung nach einem der vorhergehenden Ansprüche, wobei die/der spiral- oder schraubenlinienförmige Feder, Spirale, Draht, Stab oder Zylinder einen oder mehrere Abschnitte aufweist, die sich entlang verschiedener Abschnitte der axialen Länge der Feder erstrecken und voneinander verschiedene Innendurchmesser (IDI1u, IDs1u, IDs1, IDI, IDI2d, IDs2d) aufweisen.

5. Vorrichtung nach einem der vorhergehenden Ansprüche, wobei die/der spiral- oder schraubenlinienförmige Feder, Spule, Draht, Stab oder Zylinder einen oder mehrere Abschnitte aufweist, die sich entlang verschiedener Abschnitte der axialen Länge der Feder erstrecken und Außendurchmesser (ODs1, ODI1, ODs2) aufweisen, die größer als, kleiner als oder verschieden voneinander sind.

6. Vorrichtung nach einem der vorhergehenden Ansprüche, wobei die/der spiral- oder schraubenlinienförmige Feder, Spule, Draht, Stab oder Zylinder (800) zumindest unter der Kraft (IP, RP), die durch das Einspritzfluid ausgeübt wird, das durch die Spritzgießmaschine in und durch den einen oder die mehreren stromaufwärtsseitigen Kanäle und den Düsenkanal eingespritzt wird, elastisch zusammendrückbar und dehnbar ist.

7. Vorrichtung nach einem der vorhergehenden Ansprüche, wobei der Ventilstift steuerbar um eine Achse des Ventilstifts drehbar ist.

8. Vorrichtung nach einem der vorhergehenden Ansprüche, wobei der Ventilstift eine axiale Länge und einen maximalen Querschnittsdurchmesser an mindestens einer ausgewählten Position entlang der axialen Länge des Ventilstifts aufweist, und wobei die/der spiral- oder schraubenlinienförmige Feder, Spule, Draht, Stab oder Zylinder einen inneren Schraubenliniendurchmesser (ID), eine innere Schraubenlinienfläche (800is), einen äußeren Schraubenliniendurchmesser (OD) und eine äußere Schraubenlinienfläche (800os) aufweist, wobei der innere Schraubenliniendurchmesser (ID) der Feder, der Spule, des Drahtes oder des Zylinders derart gewählt ist, dass die innere Schraubenlinienfläche (800is) mit der Außenumfangsfläche (1040s) des Ventilstifts (1040) zumindest an der ausgewählten Position entlang der axialen Länge des Ventilstifts in Kontakt oder in Eingriff kommt, die den maximalen Querschnittsdurchmesser (PD) aufweist.

9. Vorrichtung nach einem der vorhergehenden Ansprüche, wobei der eine oder die mehreren stromaufwärtsseitigen Kanäle (19bfc, 40dfc) und der Düsenkanal (42a) jeweils eine innere Kanaloberfläche (19bs, 40dfcs, 22s) aufweisen, wobei die/der spiral- oder schraubenlinienförmige Feder, Spule, Draht, Stab oder Zylinder einen inneren Schraubenliniendurchmesser (ID), eine innere Schraubenlinienfläche (800is), einen äußeren Schraubenliniendurchmesser (OD) und eine äußere Schraubenlinienfläche (800os) aufweist, wobei die Feder, die Spule, der Draht, der Stab oder der Zylinder derart konfiguriert ist, dass die äußere Schraubenlinienfläche (800os) mit der inneren Kanaloberfläche (19bs, 19bfcis, 40dfcis, 22s) eines oder mehrerer der stromaufwärtsseitigen Kanäle (19bfc, 40dfc) und des Düsenkanals (42a) in Eingriff oder in Kontakt kommt.

10. Vorrichtung nach einem der vorhergehenden Ansprüche, wobei der eine oder die mehreren stromaufwärtsseitigen Kanäle und der Düsenkanal jeweils eine innere Kanaloberfläche (42as, 40mcis, 40dfcis) aufweisen, wobei die/der spiral- oder schraubenlinienförmige Feder, Spule, Draht, Stab oder Zylinder einen inneren Schraubenliniendurchmesser (ID), eine innere Schraubenlinienfläche (800is), einen äußeren Schraubenliniendurchmesser (OD) und eine äußere Schraubenlinienfläche (800os) aufweist, wobei die Feder, die Spule, der Draht, der Stab oder der Zylinder derart eingerichtet ist, dass die äußere Schraubenlinienfläche (800os) mit der inneren Kanaloberfläche (42as, 40mcis, 40dfcis) eines oder mehrerer der stromaufwärtsseitigen Kanäle (40dfc, 19bfc) und des Düsenkanals (42a) in Eingriff oder in Kontakt kommt.

11. Vorrichtung nach einem der vorhergehenden Ansprüche, wobei die/der spiral- oder schraubenlinienförmige Feder, Spule, Draht, Stab oder Zylinder ein stromaufwärtsseitiges Ende (800ue) aufweist, wobei der Düsenkanal (42a) oder der Verteilerkanal (40mc) einen Anschlag (40r) oder eine Innenfläche (40mcs) aufweist, der/die dazu geeignet ist, mit dem stromaufwärtsseitigen Ende (800ue, 800ued) der Feder in Eingriff zu kommen und das stromaufwärtsseitige Ende der Feder zu drosseln (40mcd) oder zu stoppen (40r), so dass es sich nicht weiter stromaufwärts bewegt.

12. Vorrichtung nach einem der vorhergehenden Ansprüche, wobei die/der spiral- oder schraubenlinienförmige Feder, Spule, Draht, Stab oder Zylinder ein stromabwärtsseitiges Ende (800de) aufweist, wobei der Düsenkanal einen Anschlag (42ir) oder eine Innenfläche (42ais) aufweist, der/die dazu geeignet ist, mit dem stromabwärtsseitigen Ende (800de) der Feder in Eingriff zu kommen (42ir) und es zu drosseln (42aded, 800deod) oder zu stoppen (42ir), so dass es sich nicht weiter stromabwärts bewegt.

13. Verfahren zum Einspritzen und Stören des Flusses eines Einspritzfluids zu einem Formhohlraum, mit dem Einspritzen des Einspritzfluids zum Formenhohlraum unter Verwendung einer Vorrichtung nach einem der vorhergehenden Ansprüche.

## Revendications

1. Appareil de moulage par injection (5) comprenant une machine de moulage par injection (15) qui génère un fluide d'injection (18), un ou plusieurs canaux amont (19bfc, 40dfc, 40mc) ayant un axe d'écoulement longitudinal (A2, A3) qui reçoivent le fluide d'injection (18) de la machine de moulage par injection (15) à une extrémité amont et qui acheminent le fluide d'injection en aval vers une extrémité aval et un ou plusieurs canaux de buse (42a), chaque canal de buse (42a) ayant un axe d'écoulement longitudinal (Al) formé dans une buse associée qui reçoit le fluide d'injection depuis le ou les canaux amont (19bfc, 40dfc) à une extrémité amont et qui achemine le fluide d'injection en aval vers une extrémité aval,
dans lequel un ressort, une bobine, un fil, une tige ou un cylindre (800) configuré sous la forme ou la morphologie d'une spirale ou d'une hélice est disposé à l'intérieur et s'étend axialement à travers un ou plusieurs des canaux amont (19bfc, 40dfc, 40mc) et le canal de buse (42a), le ressort, la bobine, le fil, la tige ou le cylindre ayant une longueur axiale (AL, DCL) et une spirale ou une hélice à droite (800r) ou à gauche (800I) ;
**caractérisé en ce que**
l'appareil comprend en outre un actionneur (940) interconnecté à une tige de soupape (1040) constituée d'une tige ou d'un arbre ayant une surface circonférentielle (1040cs, OS), l'actionneur pouvant être commandé pour entraîner la tige de soupape en amont et en aval à travers le canal de buse (42a) ; et
dans lequel le ressort, la bobine, le fil, la tige ou le cylindre en forme de spiral a une ouverture axiale (AXA) à travers laquelle la tige de soupape (1040) est disposée, et la tige de soupape a une surface circonférentielle (1040cs, OS) qui est lisse ou a une discontinuité (11, 13, 115, 17, 19, 21, 23, 25, 800sgr, 800sgl) formée dans la surface circonférentielle extérieure (1040cs, OS) qui interagit avec le fluide d'injection s'écoulant devant ou le long de la surface circonférentielle extérieure (1040cs, OS) pour amener le fluide d'injection s'écoulant à s'écouler d'une manière turbulente, perturbée ou mélangée.

2. Appareil selon la revendication 1, dans lequel le ressort, la bobine, le fil, la tige ou le cylindre en forme de spirale ou d'hélice est circulaire (800cs), ovale, carré, triangulaire, rectangulaire ou à faces multiplan ou multi-linéaire (800fs) en section transversale.

3. Appareil selon l'une quelconque des revendications précédentes, dans lequel le ressort, la bobine, le fil, la tige ou le cylindre en forme de spirale ou d'hélice présente un ou plusieurs pas sélectionnés (P) s'étendant sur une ou plusieurs parties sélectionnées de la longueur axiale.

4. Appareil selon l'une quelconque des revendications précédentes, dans lequel le ressort, la bobine, le fil, la tige ou le cylindre en forme de spirale ou d'hélice a une ou plusieurs parties qui s'étendent le long de différentes parties de la longueur axiale du ressort qui ont des diamètres intérieurs (IDI1u, IDs1u, IDs1, IDI, IDI2d, IDs2d) qui sont supérieurs, inférieurs ou différents les uns des autres.

5. Appareil selon l'une quelconque des revendications précédentes, dans lequel le ressort, la bobine, le fil, la tige ou le cylindre en forme de spirale ou d'hélice a une ou plusieurs parties s'étendant le long de différentes parties de la longueur axiale du ressort qui ont des diamètres extérieurs (ODs1, ODI1, ODs2) qui sont supérieurs, inférieurs ou différents les uns des autres.

6. Appareil selon l'une quelconque des revendications précédentes, dans lequel le ressort, la bobine, le fil, la tige ou le cylindre (800) en forme de spirale ou d'hélice est élastiquement compressible et extensible au moins sous une force (IP, RP) exercée par le fluide d'injection injecté dans et à travers le ou les canaux amont et le canal de buse par la machine de moulage par injection.

7. Appareil selon l'une quelconque des revendications précédentes, dans lequel la tige de soupape peut tourner de manière contrôlable autour d'un axe de la tige de soupape.

8. Appareil selon l'une quelconque des revendications précédentes, dans lequel la tige de soupape a une longueur axiale et un diamètre maximal de section transversale à au moins une position sélectionnée le long de la longueur axiale de la tige de soupape et dans lequel le ressort, la bobine, le fil, la tige ou le cylindre en forme de spirale ou d'hélice a un diamètre d'hélice intérieur (ID), une surface d'hélice intérieure (800is), un diamètre d'hélice extérieur (OD) et une surface d'hélice extérieure (800os), le diamètre d'hélice intérieur (ID) du ressort, de la bobine, du fil ou du cylindre étant sélectionné de telle sorte que la surface d'hélice intérieure (800is) contacte ou engage la surface circonférentielle extérieure (1040s) de la tige de soupape (1040) au moins à la position sélectionnée le long de la longueur axiale de la tige de soupape qui a le diamètre de section transversale maximum (PD).

9. Appareil selon l'une quelconque des revendications précédentes, dans lequel le ou les canaux amont (19bfc, 40dfc) et le canal de buse (42a) ont chacun une surface de canal intérieure (19bs, 40dfcs, 22s), le ressort, la bobine, le fil, la tige ou le cylindre en forme de spirale ou d'hélice ayant un diamètre d'hélice intérieur (ID), une surface d'hélice intérieure (800is), un diamètre d'hélice extérieur (OD) et une surface d'hélice extérieure (800os), le ressort, la bobine, le fil, la tige ou le cylindre étant adapté de telle sorte que la surface d'hélice extérieure (800os) engage ou contacte la surface de canal intérieure (19bs, 19bfcis, 40dfcis, 22s) d'un ou plusieurs des canaux amont (19bfc, 40dfc) et du canal de buse (42a).

10. Appareil selon l'une quelconque des revendications précédentes, dans lequel le ou les canaux amont et le canal de buse ont chacun une surface de canal intérieure (42as, 40mcis, 40dfcis), le ressort, la bobine, le fil, la tige ou le cylindre en forme de spirale ou d'hélice ayant un diamètre d'hélice intérieur (ID), une surface d'hélice intérieure (800is), un diamètre d'hélice extérieur (OD) et une surface d'hélice extérieure (800os), le ressort, la bobine, le fil, la tige ou le cylindre étant adapté de telle sorte que la surface d'hélice extérieure (800os) engage ou contacte la surface de canal intérieure (42as, 40mcis, 40dfcis) d'un ou plusieurs des canaux amont (40dfc, 19bfc) et du canal de buse (42a).

11. Appareil selon l'une quelconque des revendications précédentes, dans lequel le ressort, la bobine, le fil, la tige ou le cylindre en forme de spirale ou d'hélice a une extrémité amont (800ue), le canal de buse (42a) ou le canal de collecteur (40mc) ayant une butée (40r) ou une surface intérieure (40mcs) adaptée pour s'engager et étrangler (40mcd) ou arrêter (40r) l'extrémité amont (800ue, 800ued) du ressort de se déplacer vers l'amont.

12. Appareil selon l'une quelconque des revendications précédentes, dans lequel le ressort, la bobine, le fil, la tige ou le cylindre en forme de spirale ou d'hélice a une extrémité aval (800de), le canal de buse ayant une butée (42ir) ou une surface intérieure (42ais) adaptée pour s'engager (42ir) et étrangler (42aded, 800deod) ou arrêter (42ir) l'extrémité aval (800de) du ressort de se déplacer vers l'aval.

13. Procédé d'injection et d'interruption de l'écoulement d'un fluide d'injection vers une cavité de moule comprenant l'injection du fluide d'injection vers la cavité de moule en utilisant un appareil selon l'une quelconque des revendications précédentes.
